(19) Europäisches Patentamt
European Patent Office
Office européen des brevets

(11) EP 2 343 661 B1

(12) EUROPEAN PATENT SPECIFICATION

(45) Date of publication and mention
of the grant of the patent:
**24.01.2018 Bulletin 2018/04**

(51) Int Cl.:
***G06F 17/30*** (2006.01)

(21) Application number: **09820217.9**

(86) International application number:
**PCT/CN2009/073782**

(22) Date of filing: **07.09.2009**

(87) International publication number:
**WO 2010/043141 (22.04.2010 Gazette 2010/16)**

(54) **A MULTIMEDIA SEARCH METHOD AND ENGINE, A META-SEARCH SERVER, AND CLIENT**

MULTIMEDIA-SUCHVERFAHREN UND -SUCHMASCHINE, METASUCHEN-SERVER UND CLIENT DAFÜR

PROCÉDÉ ET MOTEUR DE RECHERCHE MULTIMÉDIA, SERVEUR DE MÉTA-RECHERCHE ET CLIENT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.09.2008 CN 200810216591**

(43) Date of publication of application:
**13.07.2011 Bulletin 2011/28**

(73) Proprietor: **Huawei Technologies Co., Ltd.
Longgang District
Shenzhen, Guangdong 518129 (CN)**

(72) Inventors:
• **LI, Zhengbing
Shenzhen
Guangdong 518129 (CN)**
• **GU, Chong
Shenzhen
Guangdong 518129 (CN)**
• **DONG, Xiaoyi
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**CN-A- 1 432 947      CN-A- 1 694 090
CN-A- 1 856 791      GB-A- 2 391 087
US-A- 5 920 856      US-A1- 2003 041 047**

• **KENNEDY L ET AL: "Query-Adaptive Fusion for Multimodal Search", PROCEEDINGS OF THE IEEE, IEEE. NEW YORK, US, vol. 96, no. 4, 1 April 2008 (2008-04-01), pages 567-588, XP011204994, ISSN: 0018-9219**
• **DING CHENG JIE: 'The Research and Implement of The Meta Search Engine' CHINA SELECTED MASTER'S THESES FULL-TEXT DATABASE 30 June 2007, XP008155135**

**Description**

**FIELD OF THE TECHNOLOGY**

The present invention relates to the field of network communication, and more particularly to a multimedia search method and engine, a meta-search server, and a client.

**BACKGROUND OF THE INVENTION**

For content-based multimedia search, because of the diversity and the ever developing of feature extraction algorithms, presently, very few feature extraction algorithms are accepted by the industry, and therefore it is difficult to standardize the algorithms. For example, although the Moving Picture Experts Group-7 (MPEG-7) has also standardized part of feature value extraction algorithms, the standardized feature extraction algorithms of the MPEG-7 are not accepted by the industry. Therefore, almost no search engine uses the feature extraction algorithms specified by the MPEG-7.

The threshold of multimedia feature extraction algorithm field is high, and not many vendors master highly effective multimedia feature extraction algorithms. At the same time, algorithms of multimedia search technology vendors are core technologies, and are not to be fully disclosed. But many multimedia content providers exist, and at the same time, many contents are not to be obtained by spiders (also known as crawlers) of other search engines. Therefore, many multimedia content providers may set up their search engines by using technology provided by the same algorithm provider.

For a multimedia search framework based on meta-search, a search request, which includes a feature value and is sent by a client, is required to be sent to multiple search engines. Since different search engines use different feature extraction algorithms, the search engines may not understand the meaning of the feature value in the search request sent by the client.

US 2003/041047 A1 discloses a method and apparatus for querying stored multimedia data in a computer system, comprising receiving into an intermediate level a high-level concept from a user describing data to be retrieved, translating, in said intermediate level, said high-level concept into low-level queries by using system pre-defined high-level concepts, transferring said low-level queries to a low level comprising one or more search engines; said one or more search engines performing a query of the stored multimedia information using said low-level queries. A matching algorithm is also disclosed.

KENNEDY L ET AL "Query-Adaptive Fusion for Multimodal Search", PROCEEDINGS OF THE IEEE, IEEE. NEW YORK, US, (20080401), vol. 96, no. 4, ISSN 0018-9219, pages 567 - 588, XP011204994, conduct a broad survey of query-adaptive search strategies in a variety of application domains, where the internal retrieval mechanism-is used for search are adapted in response to the anticipated needs for each individual query experienced by the system. While these query-adaptive approaches can range from meta-search over text collections to multimodal search over video databases, it is proposed in this document that all such systems can be framed and discussed in the context of a single, unified framework. It is kept an eye towards the domain of video search, where search cues are available from a rich set of modalities, including textual speech transcripts, low-level visual features, and high-level semantic concept detectors. The relative efficacy of each of the modalities is highly variant between many types of queries. It is observed in this document that the state of the art in query-adaptive retrieval frameworks for video collections is highly dependent upon the definition of classes of queries, which are groups of queries that share similar optimal- search strategies, while many applications in text and web retrieval have included many advanced strategies, such as direct prediction of search method performance and inclusion of contextual cues from the searcher. It is concluded in this document that such advanced strategies previously developed for text retrieval have a broad range of possible applications in future research in multimodal video search.

**SUMMARY OF THE INVENTION**

In an embodiment, the present invention provides a multimedia search method. The method includes the following steps.

A feature extraction algorithm ID set sent by a member multimedia search engine is received, an ID of a feature extraction algorithm supported by a meta-search server in the set is determined, and a mapping relation between the ID of the supported feature extraction algorithm and the member multimedia search engine is saved.

A search condition sent by a client is received, where the search condition includes the feature extraction algorithm ID and a feature value extracted according to the feature extraction algorithm corresponding to the feature extraction algorithm ID.

A corresponding member multimedia search engine through the mapping relation is selected according to the feature extraction algorithm ID.

A search request including the feature extraction algorithm ID and the feature value is sent to the member multimedia search engine for search.

In an embodiment, the present invention provides a multimedia search method. The method includes the following steps.

A feature extraction algorithm ID set sent by a member multimedia search engine is received, an ID of a feature extraction algorithm supported by a meta-search server in the set is determined, and a mapping relation between the ID of the supported feature extraction algorithm and the member multimedia search engine is saved.

The ID of the supported feature extraction algorithm is returned to the member multimedia search engine, and a service type corresponding to the ID of the supported feature extraction algorithm sent by the member multimedia search engine is received.

Service type classifications are provided, and the member multimedia search engine is put into the different service type classifications according to the received service type.

A text description information further includes a service type input by a user.

A search condition sent by a client is received, where the search condition includes multimedia data and the text description information of the multimedia data.

The service type is analyzed according to the text description information, and the corresponding member multimedia search engine is selected according to a mapping relation between the service type and the member multimedia search engine.

A feature value is extracted from the multimedia data according to a feature extraction algorithm supported by the selected member multimedia search engine.

A search request including an ID of the feature extraction algorithm and the feature value is sent to the member multimedia search engine for search.

In an embodiment, the present invention provides a meta-search server. The meta-search server includes a second receiving unit, a first receiving unit, a selection unit, and a sending unit.

The second receiving unit is configured to receive a feature extraction algorithm ID set sent by a member multimedia search engine, determine an ID of a feature extraction algorithm supported by the meta-search server in the set, and save a mapping relation between the ID of the supported feature extraction algorithm and the member multimedia search engine.

The first receiving unit is configured to receive a search condition sent by a client, where the search condition includes a feature extraction algorithm ID and a feature value extracted according to a feature extraction algorithm corresponding to the feature extraction algorithm ID.

The selection unit is configured to select the corresponding member multimedia search engine through the mapping relation according to the feature extraction algorithm ID;.

The sending unit is configured to send a search request including the feature extraction algorithm ID and the feature value to the member multimedia search engine for search.

Beneficial effects of the embodiments of the present invention are described in the following. A meta-search server maintains feature extraction algorithm intercommunication information, thus avoiding standardizing feature extraction algorithms. The meta-search server integrates supporting abilities of feature extraction algorithms of different multimedia member search engines, and thus the consistency between a feature extraction algorithm of a client and that of the member search engines is guaranteed.

**BRIEF DESCRIPTION OF THE DRAWINGS**

FIG. 1A is a flow chart of a method according to an embodiment of the present invention;

FIG. 1B is a flow chart of a method according to an embodiment of the present invention;

FIG. 2 is a flow chart of a method according to an embodiment of the present invention;

FIG. 3A is a flow chart of a method according to an embodiment of the present invention;

FIG. 3B is a flow chart of a method according to an embodiment of the present invention;

FIG. 4 is a flow chart of a method according to an embodiment of the present invention;

FIG. 5 is a flow chart of a method according to an embodiment of the present invention;

FIG. 6 is a flow chart of a method according to an embodiment of the present invention;

FIG. 7A is a flow chart of a method according to an embodiment of the present invention;

FIG. 7B is a flow chart of a method according to an embodiment of the present invention;

FIG. 8 is a flow chart of a method according to an embodiment of the present invention;

FIG. 9 is a flow chart of a method according to an embodiment of the present invention;

FIG. 10 is a flow chart of a method according to an embodiment of the present invention;

FIG. 11 is a flow chart of a method according to an embodiment of the present invention;

FIG. 12A is a structural view of a meta-search server according to an embodiment of the present invention;

FIG. 12B is a structural view of a meta-search server according to an embodiment of the present invention;

FIG. 12C is a structural view of a meta-search server according to an embodiment of the present invention;

FIG. 12D is a structural view of a meta-search server according to an embodiment of the present invention;

FIG. 13A is a structural view of a meta-search server according to an embodiment of the present invention;

FIG. 13B is a structural view of a meta-search server according to an embodiment of the present invention;

FIG. 14 is a structural view of a client according to an embodiment of the present invention; and

FIG. 15 is a structural view of a multimedia search engine according an embodiment of the present invention.

## DETAILED DESCRIPTION OF THE EMBODIMENTS

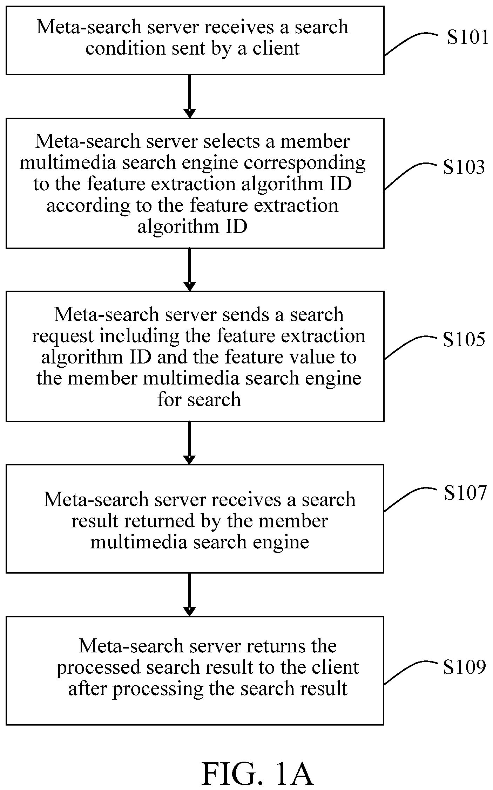

As shown in FIG. 1A, in an embodiment, the present invention provides a multimedia search method. The method includes the following steps.

In step S101, a meta-search server receives a search condition sent by a client, where the search condition includes a feature extraction algorithm ID and a feature value extracted according to a feature extraction algorithm corresponding to the feature extraction algorithm ID.

In step S103, the meta-search server selects a member multimedia search engine corresponding to the feature extraction algorithm ID according to the feature extraction algorithm ID.

In step S105, the meta-search server sends a search request including the feature extraction algorithm ID and the feature value to the member multimedia search engine for search.

Alternatively, after step S105, the method may further include the following steps.

In step S107, the meta-search server receives a search result returned by the member multimedia search engine.

In step S109, after processing the search result, the meta-search server returns the processed search result to the client.

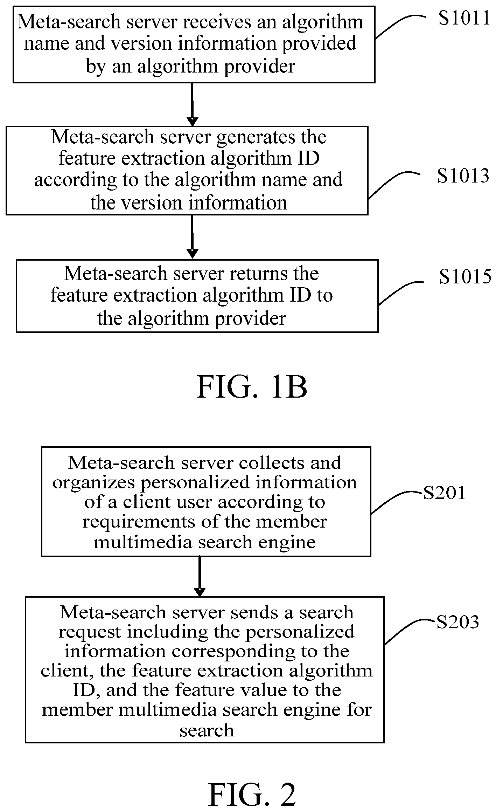

Alternatively, as shown in FIG. 1B, before step S101, the method may further include the following steps to obtain the feature extraction algorithm ID.

In step S1011, the meta-search server receives an algorithm name and version information provided by an algorithm provider.

In step S1013, the meta-search server generates the feature extraction algorithm ID according to the algorithm name and the version information.

In step S1015, the meta-search server returns the feature extraction algorithm ID to the algorithm provider, so that the algorithm provider distributes the feature extraction algorithm ID to the client and the member multimedia search engine.

In the embodiment, as shown in FIG. 1A, the client uses the feature extraction algorithm to extract the feature value, so that burdens on a server are lightened.

Corresponding to the steps from step S1011 to step S1015, in this embodiment, the following scenario is provided for illustration. An algorithm provider A provides an algorithm, which can help a picture database storing Joint Photography Experts Group (JPG) format data to build an index based on feature values. An algorithm provider B provides an algorithm, which can help a picture database storing JPG format data to build an index based on feature values.

An operator (referred to as "CBCC" for short) deploys a meta-search server. Information sent by the algorithm provider A and the algorithm provider B to the meta-search server includes an algorithm name and version information of the algorithm, and of course may further include a data format supported by the algorithm, a feature name related to the algorithm, and an alias list of the algorithm (a feature extraction algorithm ID list of the algorithm registered and created in another meta-search server). After the meta-search server performs processing, in order to guarantee intercommunication, a certain format is used, and a specific format may be a country code + a local code + an abbreviated English name of a company + an authorization number. A feature extraction algorithm ID allocated to the algorithm provider A is: 86+0755+CBCC+123. A feature extraction algorithm ID allocated to the algorithm provider B is: 86+0755+CBCC+456. According to the country code, the local code, and the abbreviated English name of the company, the meta-search server can obtain some service support information of an authorized algorithm (such as a support score of the algorithm regarding a service) from another corresponding meta-search server. Referring to Table 1, each meta-search server maintains a table, which helps the meta-search server to find an IP address or a Uniform Resource Locator (URL) corresponding to each feature extraction algorithm ID. If a meta-search server 86+0755+CBCC obtains an algorithm alias of 86+025+CBCC+123, the meta-search server may find an IP address corresponding to 86+025+CBCC through the table, and obtain service support information of the meta-search server regarding the algorithm according to the IP address and the corresponding algorithm alias number (86+025+CBCC+123).

**Table 1**

| Country Code | Local Code | Abbreviated English Name | IP Address | URL |
|---|---|---|---|---|
| 86 | 0755 | CBCC | 192.168.1.1 | *.*.* |
| 86 | 025 | CBCC | 192.168.1.10 | *.*.* |

The algorithm providers A and B provide technical support to a client and a member multimedia search engine respectively, distribute the feature extraction algorithm IDs (86+0755+CBCC+123 and 86+0755+CBCC+456) to the client and the member multimedia search engine respectively, so that the client capable of supporting feature extraction and the member multimedia search engine supporting search based on a feature value are established.

After the algorithm provider obtains the feature extraction algorithm ID, the algorithm provider may update registration information of the algorithm provider in the meta-search server according to the IDs in a real-time manner. For example, a feature extraction algorithm ID is further generated for the algorithm provider in another meta-search server. The algorithm provider updates an alias list in each of the meta-search servers according to an ID generated in each of the meta-search servers, so that it is guaranteed that each of the meta-search servers has all of the IDs of the algorithm (that is, including the ID generated by this meta-search server, and also including the IDs generated by other meta-search servers).

Optionally, when multiple meta-search servers are interconnected, before step S101, feature extraction algorithm IDs may also be generated for all algorithm providers by an algorithm authorization center. All of the meta-search servers obtain feature extraction algorithm ID lists through the center.

An authority deploys an algorithm authorization center, and the number of the center is 86. Information sent by the algorithm provider A and the algorithm provider B to the meta-search server includes the algorithm name and the version information of the algorithm, and may also include the data format supported by the algorithms. After the meta-search server performs processing, a feature extraction algorithm ID allocated to the algorithm provider A is: 86+123; a feature extraction algorithm ID allocated to the algorithm provider B is: 86+456. Then, the algorithm providers A and B provide technical support for a client and a member multimedia search engine respectively, and distribute the feature extraction algorithm IDs (86+123 and 86+456) to the client and the member multimedia search engine respectively.

The algorithm authorization center sends the two authorized feature extraction algorithm IDs to meta-search servers associated with the algorithm authorization center. The meta-search servers update their authorization ID lists, and obtain information corresponding to each of the feature extraction algorithm IDs.

The meta-search servers may also obtain the authorization ID lists and the relevant information corresponding to each of the feature extraction algorithm IDs from the algorithm authorization center in an active manner. The information includes algorithm names and version information of the algorithms, and may also include feature names related to the algorithms, supported media formats, and alias lists created in other algorithm centers (feature extraction algorithm ID lists of the algorithms created in the other algorithm centers).

When an authorized algorithm in the algorithm authorization center changes, a meta-search server associated with the algorithm authorization center can be informed. Therefore, the meta-search server can update a feature extraction algorithm ID list and relevant information corresponding to each feature extraction algorithm ID in the meta-search server in a real-time manner.

Based on a feature extraction algorithm ID, and an IP address or an URL of each cooperative meta-search server saved in advance, a meta-search server may also obtain support information of each of the servers regarding the feature extraction algorithm ID (such as a support score of each algorithm regarding a service) from the meta-search servers that cooperate with the meta-search server. When the capability of the meta-search server is not sufficient for supporting a search of a user, the meta-search server can obtain relevant search information from the cooperative meta-search servers based on the information. When an algorithm provider registers with multiple algorithm authorization centers, the algorithm provider is responsible for guaranteeing the consistency of ID lists of the algorithm in each of the authorization centers.

After obtaining an ID, an algorithm provider can update registration information of the algorithm provider in an algorithm authorization center according to the ID in a real-time manner. For example, the algorithm provider further generates an ID in another algorithm authorization center. The algorithm provider updates alias lists in the algorithm authorization centers according to the ID generated in each of the algorithm authorization centers, so that it is guaranteed that each of the algorithm authorization centers has all of the IDs of the algorithm (that is, including the ID generated by this algorithm authorization center, and also including the IDs generated by other algorithm authorization centers).

Optionally, as shown in FIG. 2, the method shown in FIG. 1A may further include the following steps.

In step S201, a meta-search server collects and organizes personalized information of a client user according to requirements of the member multimedia search engine.

Then, step S105 may include the following steps.

In step S203, the meta-search server sends a search request including the personalized information corresponding to the client, the feature extraction algorithm ID, and the feature value to the member multimedia search engine for search.

The personalized information may include at least one of: the gender and the age of the client user, a location where the user is located, and a media type the client supports.

Corresponding to steps from step S101 to step S109 and steps from S201 to S203, the following scenario is provided in this embodiment for illustration.

A user A finds a jacket she is interested in, takes a photo with a mobile phone, outlines a clothing photo out of the photo with client software, inputs "jacket" as a key word, and chooses "clothing" as a search type. Then, the user sends the key word, the focused service type, and two feature values extracted with a feature extraction algorithm A (ID: 86+123) and a feature extraction algorithm B (ID: 86+456) respectively to a meta-search server A.

After receiving the search condition sent by the client, the meta-search server A extracts authorization IDs of the feature extraction algorithms used, and learns that the feature extraction algorithm 86+123 is supported by a member multimedia search engine A and a member multimedia search engine B; the feature extraction algorithm 86+456 is supported by the member multimedia search engine B and a member multimedia search engine C. Then, the meta-search server A extracts the service type sent by the user, and learns that a clothing search engine is only supported by the member multimedia search engine A and the member multimedia search engine B. Therefore, the server only sends a search request to the member multimedia search engine A and the member multimedia search engine B.

If the meta-search server A finds that the search capability of the meta-search server A cannot satisfy the search request of the client, the meta-search server A sends the search request of the user to a meta-search server B. The meta-search server B uses the search condition sent by the meta-search server A, and returns a search result to the meta-search server A. The meta-search server A integrates the search result returned by the meta-search server B.

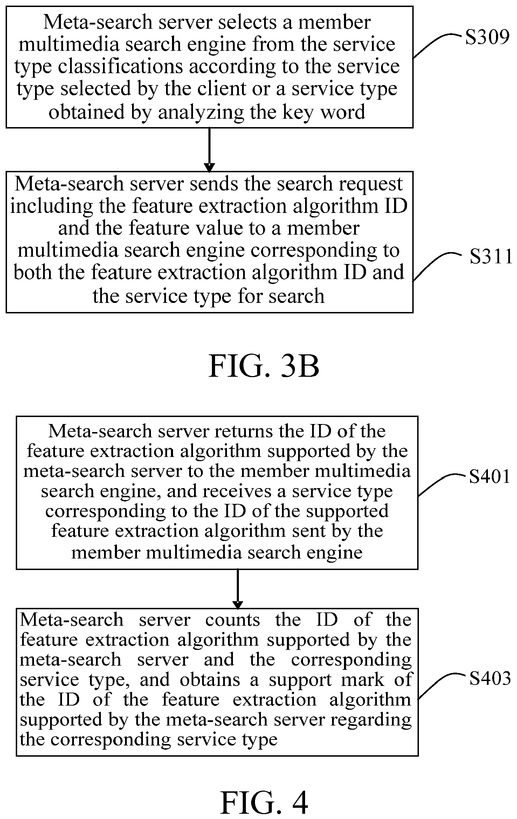

The cooperative meta-search server B is selected according to algorithm service support information of the meta-search server B saved in the meta-search server A. If multiple cooperative meta-search servers exist, the service support information is determined according a service support score of each of the meta-search servers regarding each algorithm (a specific determining method is described in an embodiment shown in FIG. 4). Taking clothing for example, in the meta-search server B, the support score of the feature extraction algorithm 86+123 is 0.8, and the support score of the feature extraction algorithm 86+456 is 0. If a meta-search server C is supported by the feature extraction algorithm 86+123, and the support score is 0.7, the meta-search server B is selected.

The search request sent by the meta-search server A to the member multimedia search engine A includes: the key word "jacket", the search type "clothing", an ID of the feature extraction algorithm A, the feature value and length extracted by the feature extraction algorithm A, and the gender information "female" extracted from a user personalized information base.

The search request sent by the meta-search server A to the member multimedia search engine B includes: the key word "jacket", the search type "clothing", the ID of the feature extraction algorithm A, the feature value and the length extracted by the feature extraction algorithm A, an ID of the feature extraction algorithm B, the feature value and length extracted by the feature extraction algorithm B, and the gender information "female" extracted from the user personalized information base.

The member multimedia search engine A and the member multimedia search engine B use information transmitted by the meta-search server for search, and return a search result to the meta-search server.

The meta-search server A processes the returned result, and returns the processed result to the client. The meta-search server A integrates the search result mainly according to information such as a score of each item in a result list returned by the member multimedia search engine and a score of the member multimedia search engine. The specific technology of integrating is already described in the prior art, and is not discussed in this embodiment.

Each feature extraction algorithm has certain limits, and is applicable to a certain service scope. In order to guarantee the integrity of a search condition, a client and a member multimedia search engine may use multiple feature extraction algorithms. Therefore, a set of negotiation mechanism is required, so as to guarantee that the feature extraction algorithms used by the client are supported by most search engines. In the method shown in FIG. 1A, the feature extraction algorithm ID sent by the client may have been negotiated by the client with the meta-search server manually in advance. The member multimedia search engine corresponding to the feature extraction algorithm ID selected by the meta-search server may also have been negotiated by the meta-search server with the member multimedia search engine manually in advance.

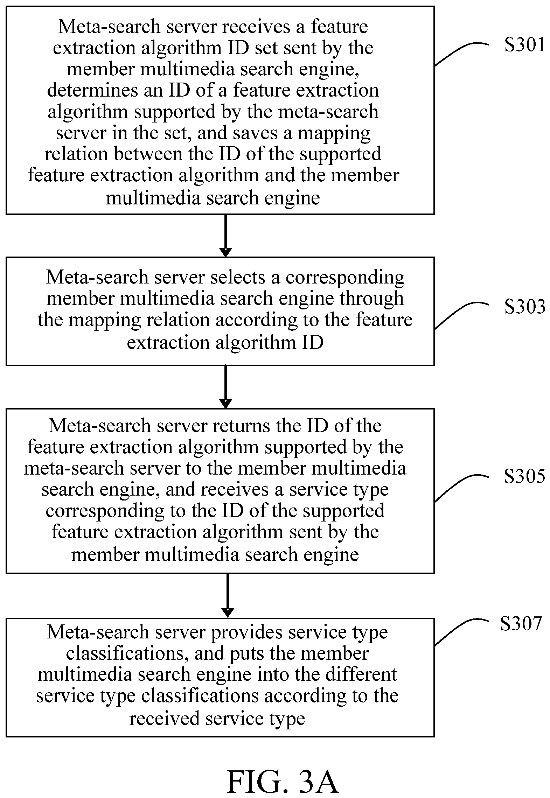

Optionally, the meta-search server negotiates the feature extraction algorithm ID with the member multimedia search engine automatically. As shown in FIG. 3A, the method shown in FIG. 1A may further include the following steps.

In step S301, the meta-search server receives a feature extraction algorithm ID set sent by the member multimedia search engine, determines an ID of a feature extraction algorithm supported by the meta-search server in the set, and saves a mapping relation between the ID of the supported feature extraction algorithm and the member multimedia search engine.

Then, step S103 may include the following steps.

In step S303, the meta-search server selects a corresponding member multimedia search engine through the mapping relation according to the feature extraction algorithm ID.

In step S305, the meta-search server returns the ID of the feature extraction algorithm supported by the meta-search server to the member multimedia search engine, and receives a service type corresponding to the ID of the supported feature extraction algorithm sent by the member multimedia search engine.

In step S307, the meta-search server provides service type classifications, and puts the member multimedia search engine into the different service type classifications according to the received service type.

Optionally, the search condition in step S101 may further include a service type selected by the client or a key word input by the client.

As shown in FIG. 3B, the method shown in FIG. 3A may further include the following steps.

In step S309, the meta-search server selects a member multimedia search engine from the service type classifications according to the service type selected by the client or a service type obtained by analyzing the key word.

Then, step S105 may include the following steps.

In step S311, the meta-search server sends the search request including the feature extraction algorithm ID and the feature value to a member multimedia search engine corresponding to both the feature extraction algorithm ID and the service type for search.

Optionally, as shown in FIG. 4, the method shown in FIG. 1 may further include the following steps.

In step S401, the meta-search server returns the ID of the feature extraction algorithm supported by the meta-search server to the member multimedia search engine, and receives a service type corresponding to the ID of the supported feature extraction algorithm sent by the member multimedia search engine.

In step S403, the meta-search server counts the ID of the feature extraction algorithm supported by the meta-search server and the corresponding service type, and obtains a support score of the ID of the feature extraction algorithm supported by the meta-search server regarding the corresponding service type.

The formula for calculating the score is: $\dfrac{\sum ri * ei}{\sum ri}$ , where ri is a score of a member multimedia search engine regarding a service, and is determined by the meta-search server A manually or automatically (based on meta-index information submitted by the member multimedia search engine and user feedback information) according to member multimedia search engine quality. When the service type corresponding to the member multimedia search engine supports the feature extraction algorithm, ei = 1; when the service type corresponding to the member multimedia search engine does not support the feature extraction algorithm, ei = 0.

In a specific scenario, a member multimedia search engine A, being a clothing-type search engine, stores all kinds of clothing pictures, and chooses an algorithm provider A as a technical supporter of the member multimedia search engine A to help the member multimedia search engine A to set up an index based on feature values.

A member multimedia search engine B, also being a clothing-type search engine, stores all kinds of clothing pictures, chooses a feature extraction algorithm A, and also chooses an algorithm provider B as a technical supporter of the member multimedia search engine B to help the member multimedia search engine B to set up an index based on feature values.

A member multimedia search engine C, being a vehicle search engine, stores all kinds of vehicle pictures, and chooses the algorithm provider B as a technical supporter thereof to help the member multimedia search engine C to set up an index based on feature values.

Support information of each of the feature extraction algorithms regarding the member multimedia search engines is shown in Table 2.

**Table 2**

| Search Engine (Service Type)/Algorithm | Algorithm A | Algorithm B |
|---|---|---|
| Member multimedia search engine A (clothing) | 1 | 0 |
| Member multimedia search engine B (clothing) | 1 | 1 |
| Member multimedia search engine C (vehicles) | 0 | 1 |

In the above table, 1" indicates that the member multimedia search engine supports the corresponding feature extraction algorithm; "0" indicates that the member multimedia search engine does not support the corresponding feature extraction algorithm. The values in the brackets in the above table indicate the specific service types the member search engines support.

A score of each of the member multimedia search engines supporting each of the service types in a meta-search server A is shown in Table 3.

**Table 3**

| Search Engine/Service Type | Clothing | Vehicles |
|---|---|---|
| Member multimedia search engine A | 0.8 | 0 |
| Member multimedia search engine B | 0.75 | 0 |
| Member multimedia search engine C | 0 | 0.8 |

In the above table, each of the values is the score given by the meta-search server A to each of the member multimedia search engines. The scores are determined by the meta-search server A, and "0" indicates not supporting.

The support score of algorithm A regarding the clothing is: $\dfrac{0.8*1+0.75*1}{0.8*1+0.75*1}=1$

The support score of algorithm B regarding the clothing is: $\dfrac{0.8*0+0.75*1}{0.8*1+0.75*1}=0.48$

The support score of algorithm B regarding the vehicles is: $\dfrac{0.8*1}{0.8*1}=1$

Referring to Table 4, the meta-search server A maintains a list recording the service support information corresponding to each of the feature extraction algorithms.

**Table 4**

| Algo rithm/service type | Clothing | Vehicles |
|---|---|---|
| Algorithm A (86+123) | 1 | 0 |
| Algorithm B (86+456) | 0.48 | 1 |

Referring to Table 5, accordingly, a meta-search server B maintains a list recording the service support information corresponding to each of the feature extraction algorithms.

8

**Table 5**

| Algorithm/Service Type | Clothing | Vehicles |
|---|---|---|
| Algorithm A (86+123) | 0.8 | 0 |
| Algorithm B (86+456) | 0 | 1 |

After obtaining the service support information corresponding to each of the feature extraction algorithms, each of the meta-search servers informs meta-search servers that cooperate with the meta-search server. The informed meta-search servers obtain the support information of the feature extraction algorithms in the meta-search server. The specific information includes the feature extraction algorithm ID, the service type corresponding to the feature extraction algorithm ID, and the score in the server. For example, for the meta-search server A, the meta-search server A provides other meta-search servers with the following information: 86+123, clothing, 1; 86+456, clothing, 0.48; and 86+456, vehicles, 1.

In this way, eventually, both the meta-search server A and the meta-search server B have the information in Table 4 and Table 5. When either of the meta-search servers is not capable enough to support a feature extraction algorithm, the meta-search server may seek support from the other meta-search server that cooperates with the meta-search server.

If each of the cooperative meta-search servers registers independently, the meta-search server A provides other cooperative meta-search servers with the following information: 86+0755+CBCC +123, clothing, 1; 86+0755+CBCC +456, clothing, 0.48; and 86+0755+CBCC +456, vehicles, 1.

No matter which method is used, each of the meta-search servers has all ID lists of registered feature extraction algorithms, and thus intercommunication is achieved.

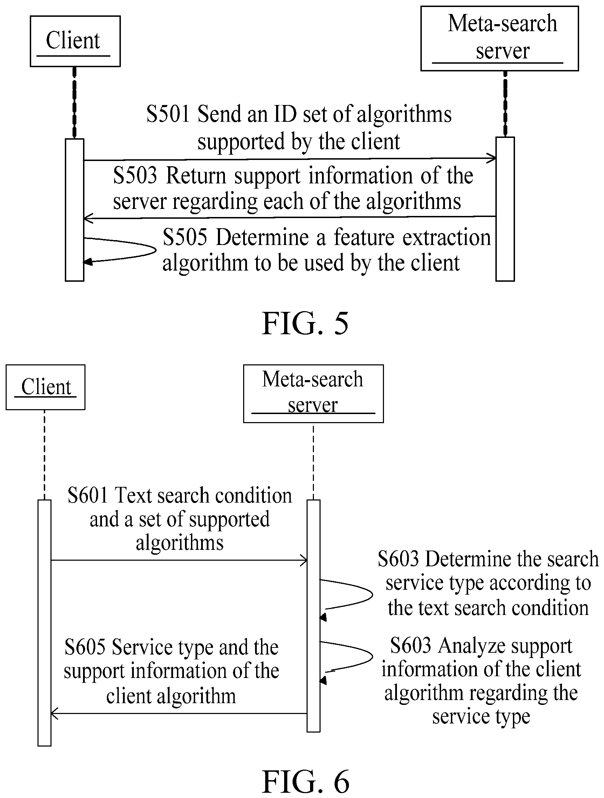

Optionally, as shown in FIG. 5, the method shown in FIG. 1A may further include the following steps.

In step S501, the meta-search server receives an ID set of feature extraction algorithms supported by the client.

In step S503, the meta-search server returns support information regarding the IDs of the feature extraction algorithms supported by the client to the client.

In step S505, the client determines a feature extraction algorithm ID to be used according to the support information returned by the meta-search server.

Then, the search condition in step S101 may include: the feature extraction algorithm ID selected according to the support information and the feature value extracted by the feature extraction algorithm corresponding to the feature extraction algorithm ID selected according to the support information.

Optionally, as shown in FIG. 6, the method shown in FIG. 1A may further include the following steps.

In step S601, the meta-search server receives a text search condition sent by the client and the ID of the feature extraction algorithm supported by the client.

In step S603, the meta-search server obtains support information of the ID of the feature extraction algorithm supported by the client regarding the determined service type according to the service type determined by the text search condition by analyzing. The support information includes: the support score of the ID of the feature extraction algorithm supported by the client regarding the determined service type or the determined service type and the ID of the feature extraction algorithm supporting the service type.

In step S605, the meta-search server returns the determined service type and the support information to the client.

Then, the search condition in step S101 may include: the feature extraction algorithm ID selected according to the support information, the service type, and the feature value extracted by the feature extraction algorithm corresponding to the feature extraction algorithm ID selected according to the support information.

In the embodiment shown in FIG. 6, the client dynamically determines a feature extraction algorithm, so that it is guaranteed that the client using multiple kinds of feature extraction algorithms selects the feature extraction algorithm best suitable for search.

Corresponding to steps from step S601 to step S605, in the embodiment, the following scenario is further provided for illustration.

A user finds a vehicle that he is interested in, so he takes a photo with a mobile phone, outlines a vehicle picture with client software, inputs a key word "vehicle introduction", and single-clicks for search.

The client software first sends the key word "vehicle introduction", the IDs of feature extraction algorithms supported by the client (86+123 and 86+456) to the meta-search server.

The meta-search server learns that the user is interested in a vehicle service by analyzing the key word "vehicle introduction". The specific analyzing technology is covered by the prior art, and is not discussed herein.

The vehicle service is supported by the feature extraction algorithm 86+456, but is not supported by the feature extraction algorithm 86+123. Therefore, the feature extraction algorithm 86+456 and the support score "1" of the feature extraction algorithm 86+456 regarding the vehicle service are returned to the client. The meta-search server may also return only the ID 86+456 of the feature extraction algorithm that is required to extract a feature value to the client.

After receiving the search service type returned by the server, the client follows the following steps.

(1) According to the returned result, the client learns that the service type regarding the search includes only one service type "vehicles", and the feature extraction algorithm 86+456 supports the feature extraction of the service type. Therefore, the client uses the feature extraction algorithm 86+456 to extract a feature. If the service type is supported by multiple feature extraction algorithms, the client may select one or more feature extraction algorithms with the highest score of the feature extraction algorithms regarding the service type according to a policy. The feature value, the corresponding feature extraction algorithm ID, and the service type corresponding to the feature value are sent to the meta-search server.

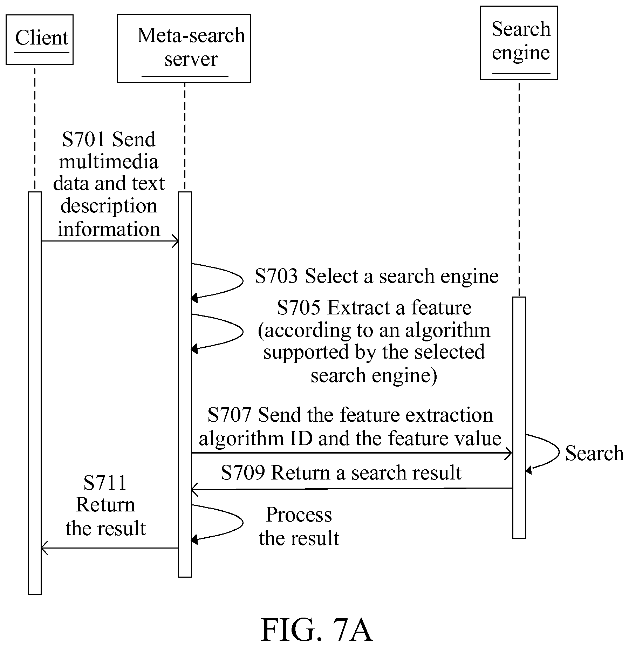

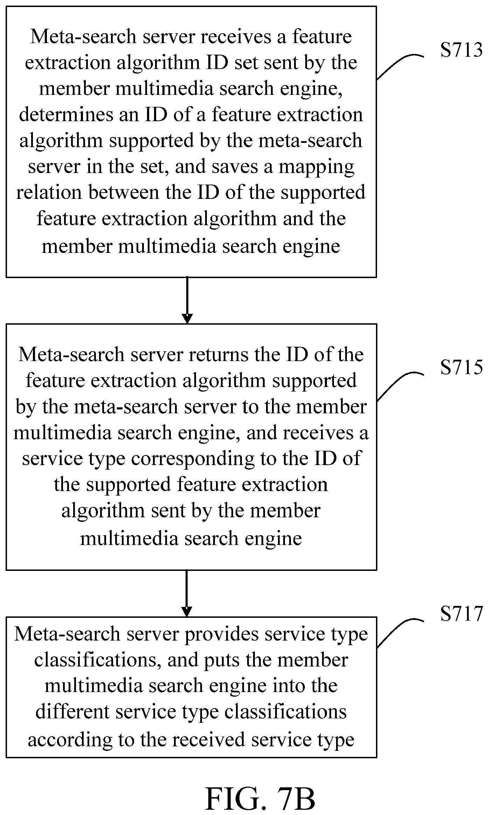

If the returned service type is not supported by the feature extraction algorithm at the client, the client directly sends the multimedia data to the meta-search server. The specific steps are shown in an embodiment shown in FIG. 7A.

(2) According to the returned result, the client learns that the service types regarding the search include multiple service types. The service type selected by the user is supported by the feature extraction algorithm of the client. If the type is supported by only one feature extraction algorithm, the feature extraction algorithm is used. If the type is supported by multiple feature extraction algorithms, the client may select one or more feature extraction algorithms with the highest score of the feature extraction algorithms regarding the service type according to a policy. The client uses the feature extraction algorithm corresponding to the service type to extract a feature value, and sends the feature value, the corresponding feature extraction algorithm ID, and the service type to the meta-search server.

If the service type selected by the user is not supported by the feature extraction algorithm at the client, the selected service type and the multimedia data are sent to the meta-search server. The specific steps are shown in the embodiment shown in FIG. 7A.

If the user selects multiple service types including the ones supported by the feature extraction algorithm and the ones not supported by the feature extraction algorithm, the client sends the selected service types and the multimedia data to the meta-search server. The specific steps are shown in the embodiment shown in FIG. 7A. The client also sends the service type, the feature value, and the corresponding feature extraction algorithm ID regarding the service type supported by the feature extraction algorithm, and at the same time, sends the service type and the multimedia data regarding the service type not supported by the feature extraction algorithm. That is to say, the feature value and the multimedia data are sent to the server at the same time.

(3) According to the returned result, the client learns that the service types regarding the search include multiple service types, and the client selects a feature extraction algorithm corresponding to the selected service type automatically. The returned service types are supported by the feature extraction algorithm at the client. If each of the service types is supported by only one feature extraction algorithm, the feature extraction algorithm is used; if the type is supported by multiple feature extraction algorithms, the client may select one or more feature extraction algorithms with the highest score of the feature extraction algorithms regarding the service type according to a policy. The client uses the feature extraction algorithm corresponding to the service type to extract a feature value, and sends the feature value, the corresponding algorithm ID, and the service type to the meta-search server.

If the returned service type is not supported by the feature extraction algorithm at the client, the selected service type and the multimedia data are sent to the meta-search server. The specific steps are shown in the embodiment shown in FIG. 7A.

If the returned service types include the ones supported by the algorithm and the ones not supported by the algorithm, the client sends the selected service types and the multimedia data to the meta-search server. The specific steps are shown in the embodiment shown in FIG. 7A. The client also sends the service type, the feature value, and the corresponding algorithm ID regarding the service type supported by the algorithm, and at the same time, sends the service type and the multimedia data regarding the service type not supported by the algorithm. That is to say, the feature value and the multimedia data are sent to the server at the same time.

The meta-search server receives the search condition sent by the client, and finds the member multimedia search engine C according to the service type and the ID of the supported feature extraction algorithm.

The search request sent by the meta-search server to the member multimedia search engine C includes: the key word "vehicles", the search type "vehicles", the ID of the feature extraction algorithm B (86+456), the feature value and length extracted by the feature extraction algorithm C, and the gender information "female" extracted from the user personalized information base.

The member multimedia search engine C uses the search request transmitted by the meta-search server for search, and returns a search result to the client.

The meta-search server processes the returned result, and returns the processed result to the client.

As shown in FIG. 7A, in an embodiment, the present invention provides a multimedia search method. The method includes the following steps.

In step S701, a meta-search server receives a search condition sent by a client, where the search condition includes multimedia data and text description information of the multimedia data.

In step S703, the meta-search server selects a corresponding member multimedia search engine according to the text description information.

In step S705, the meta-search server extracts a feature value from the multimedia data according to a feature extraction algorithm supported by the selected member multimedia search engine.

In step S707, the meta-search server sends a search request including an ID of the feature extraction algorithm and the feature value to the member multimedia search engine for search.

Optionally, the text description information includes a key word and a service type. In step S703, the service type is analyzed according to the text description information, and the corresponding member multimedia search engine is selected according to a mapping relation between the service type and the member multimedia search engine.

Optionally, after step S707, the method may further include the following steps.

In step S709, the meta-search server receives a search result returned by the member multimedia search engine.

In step S711, after processing the search result, the meta-search server returns the processed search result to the client.

Optionally, the processing of the search result specifically includes the following step.

The search results are re-sequenced according to the text description information of the search result returned by each of member multimedia search engines, a score of each of the member multimedia search engines, or a similarity value attached to the result returned by each of the member multimedia search engines.

Optionally, before step S701, the method may further include the following steps. (The following steps are the same as shown in FIG. 1B, and FIG. 1B may be referred to for the corresponding steps.)

In step S7011, (referring to step S1011) the meta-search server receives an algorithm name and version information provided by an algorithm provider.

In step S7013, (referring to step S1013) the meta-search server generates the feature extraction algorithm ID according to the algorithm name and the version information.

In step S7015, (referring to step S1015) the meta-search server returns the feature extraction algorithm ID to the algorithm provider, so that the algorithm provider distributes the feature extraction algorithm ID to the client and the member multimedia search engine.

Optionally, as shown in 7B, the method shown in FIG. 7A may further include the following steps.

In step S713, the meta-search server receives a feature extraction algorithm ID set sent by the member multimedia search engine, determines an ID of a feature extraction algorithm supported by the meta-search server in the set, and saves a mapping relation between the ID of the supported feature extraction algorithm and the member multimedia search engine.

In step S715, the meta-search server returns the ID of the feature extraction algorithm supported by the meta-search server to the member multimedia search engine, and receives a service type corresponding to the ID of the supported feature extraction algorithm sent by the member multimedia search engine.

In step S717, the meta-search server provides service type classifications, and puts the member multimedia search engine into the different service type classifications according to the received service type.

The text description information in step S701 includes information such as the service type and the key word.

In the embodiment as shown in FIG. 7A, the feature value is extracted at the server end, so that the technical threshold of the client supporting the multimedia search is lowered, and network traffics as well as burdens of the member multimedia search engine are lightened.

Corresponding to steps from step S701 to step S717, in the embodiment, the following scenario is further provided for illustration.

A client only supports a feature extraction algorithm A. A user sees a vehicle, takes a photo with a mobile phone, outlines a vehicle picture with client software, inputs a key word "vehicles" and a service type "vehicles", and single-clicks for search. The client judges that the feature extraction algorithm A does not support the service type "vehicles", so that the client sends the key word "vehicles", the service type "vehicles", and the outlined vehicle picture to a meta-search server.

For the sent vehicle picture, if the picture is already put in the network, for example, the user finds an interesting vehicle picture on a website, he may also directly send the link of the picture to the meta-search server, and send the key word "vehicles" as well as the service type "vehicles" at the same time.

The meta-search server receives the information sent by the client, and finds the member multimedia search engine C that supports the service according to the service type.

The meta-search server finds that the feature extraction algorithm supported by the member multimedia search engine C is the algorithm B, and uses the algorithm B to extract a feature value of the vehicle picture. Information sent by the meta-search server to the member multimedia search engine C includes: the key word "vehicles", the service type "vehicles", the ID of the algorithm B, the feature value and length extracted by the algorithm B, and the gender information "female" extracted from the user personalized information base.

If the meta-search server receives the link of the picture, the meta-search server first downloads the picture, and then uses the feature extraction algorithm to extract the corresponding feature value.

The member multimedia search engine C uses the information sent by the meta-search server, such as the key word "vehicles", the service type "vehicles", and the feature value, for search, and returns a search result to the meta-search server.

The meta-search server processes the returned result, and returns the processed result to the client.

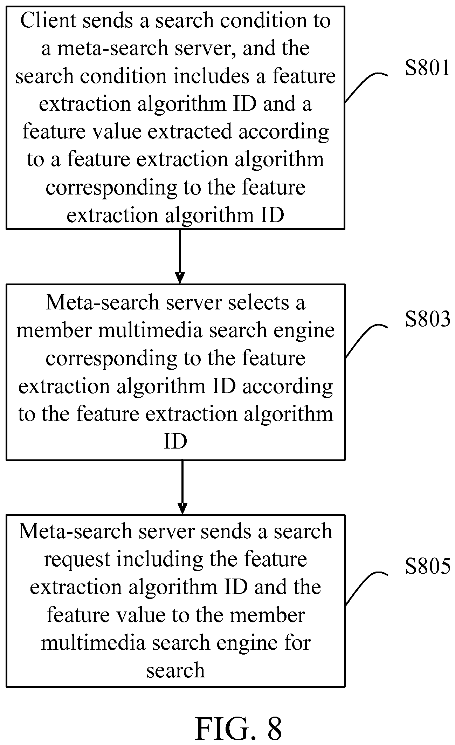

As shown in FIG. 8, in an embodiment, the present invention provides a multimedia search method. The method includes the following steps.

In step S801, a client sends a search condition to a meta-search server. The search condition includes a feature extraction algorithm ID and a feature value extracted according to a feature extraction algorithm corresponding to the feature extraction algorithm ID.

In step S803, the meta-search server selects a member multimedia search engine corresponding to the feature extraction algorithm ID according to the feature extraction algorithm ID.

In step S805, the meta-search server sends a search request including the feature extraction algorithm ID and the feature value to the member multimedia search engine for search.

Optionally, before step S801 shown in FIG. 8, the method may further include the following steps. (The following steps are the same as shown in FIG. 5, and FIG. 5 may be referred to for the corresponding steps.)

In step S901, (referring to step S501) the client sends an ID set of feature extraction algorithms supported by the client to the meta-search server.

In step S903, (referring to step S503) the client receives support information regarding the IDs of the feature extraction algorithms supported by the client returned by the meta-search server.

The search condition in step S801 specifically includes the following: The feature extraction algorithm ID selected according to the support information and the feature value extracted by the feature extraction algorithm corresponding to the feature extraction algorithm ID selected according to the support information.

Optionally, before step S801 shown in FIG. 8, the method may further include the following steps. (The following steps are the same as shown in FIG. 6, and FIG. 6 may be referred to for the corresponding steps.)

In step S1001, (referring to step S601) the client sends a text search condition and the ID of the feature extraction algorithm supported by the client to the meta-search server.

In step S1003, (referring to step S603) the meta-search server obtains support information of the ID of the feature extraction algorithm supported by the client regarding a determined service type according to the service type determined by the text search condition by analyzing. The support information includes the following: The support score of the ID of the feature extraction algorithm supported by the client regarding the determined service type or the determined service type and the ID of the feature extraction algorithm supporting the service type.

In step S1005, (referring to step S605) the client receives the determined service type and the support information.

The search condition in step S801 specifically includes the following: The feature extraction algorithm ID selected according to the support information, the service type, and the feature value extracted by the feature extraction algorithm corresponding to the feature extraction algorithm ID selected according to the support information.

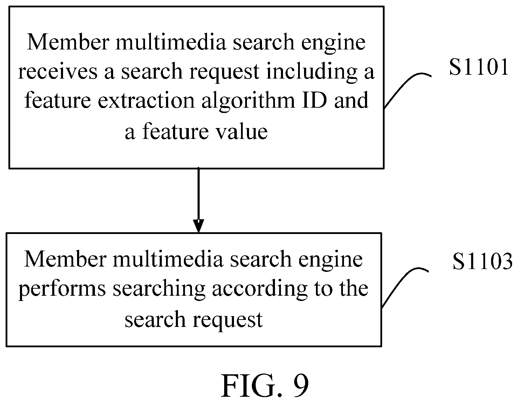

As shown in FIG. 9, in an embodiment, the present invention provides a multimedia search method. The method includes the following steps.

In step S1101, a member multimedia search engine receives a search request including a feature extraction algorithm ID and a feature value.

In step S1103, the member multimedia search engine performs searching according to the search request.

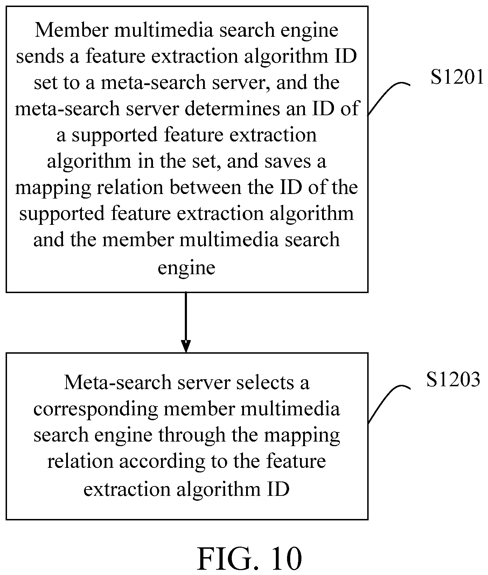

Optionally, as shown in FIG. 10, the method shown in FIG. 9 may further include the following steps.

In step S1201, the member multimedia search engine sends a feature extraction algorithm ID set to a meta-search server, so that the meta-search server determines an ID of a supported feature extraction algorithm in the set, and saves a mapping relation between the ID of the supported feature extraction algorithm and the member multimedia search engine.

In step S1203, the meta-search server selects a corresponding member multimedia search engine through the mapping relation according to the feature extraction algorithm ID.

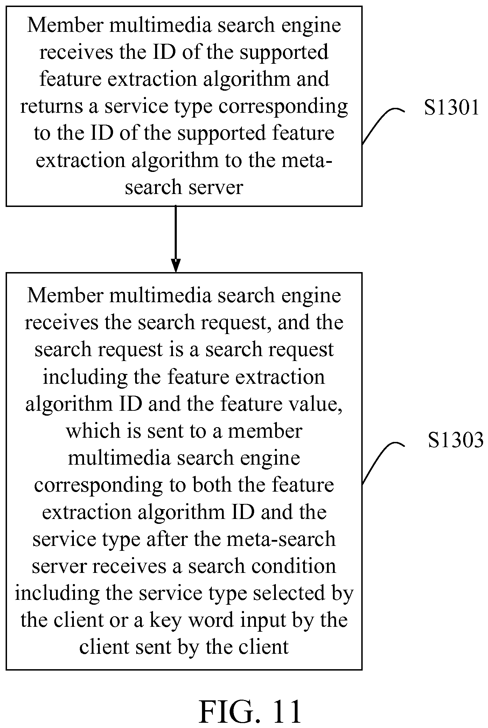

Optionally, as shown in FIG. 11, the method shown in FIG. 9 may further include the following steps.

In step S1301, the member multimedia search engine receives the ID of the supported feature extraction algorithm and returns a service type corresponding to the ID of the supported feature extraction algorithm to the meta-search server, so that the meta-search server adds the member multimedia search engine to service type classifications provided by the meta-search server according to the service type.

In step S1303, the member multimedia search engine receives the search request. The search request is a search request including the feature extraction algorithm ID and the feature value, which is sent to a member multimedia search engine corresponding to both the feature extraction algorithm ID and the service type after the meta-search server receives a search condition including the service type selected by the client or a key word input by the client sent by the client.

As shown in 12A, in an embodiment, the present invention provides a meta-search server including a first receiving unit 101, a first selection unit 103, and a first sending unit 105.

The first receiving unit 101 is configured to receive a search condition sent by a client, where the search condition includes a feature extraction algorithm ID and a feature value extracted according to a feature extraction algorithm corresponding to the feature extraction algorithm ID.

The first selection unit 103 is configured to select a member multimedia search engine corresponding to the feature extraction algorithm ID according to the feature extraction algorithm ID.

The first sending unit 105 is configured to send a search request including the feature extraction algorithm ID and the feature value to the member multimedia search engine for search.

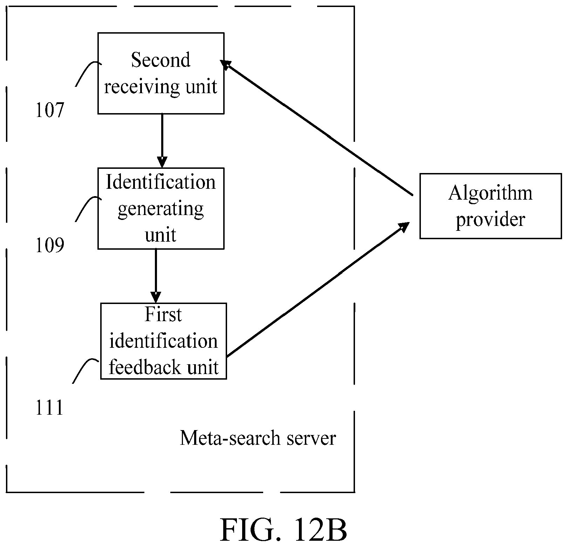

Optionally, as shown in FIG. 12B, the meta-search server may further include a second receiving unit 107, an identification generating unit 109, and a first identification feedback unit 111.

The second receiving unit 107 is configured to receive an algorithm name and version information sent by an algorithm provider.

The identification generating unit 109 is configured to generate the feature extraction algorithm ID according to the algorithm name and the version information.

The first identification feedback unit 111 is configured to return the feature extraction algorithm ID to the algorithm provider, so that the algorithm provider distributes the feature extraction algorithm ID to the client and the member multimedia search engine.

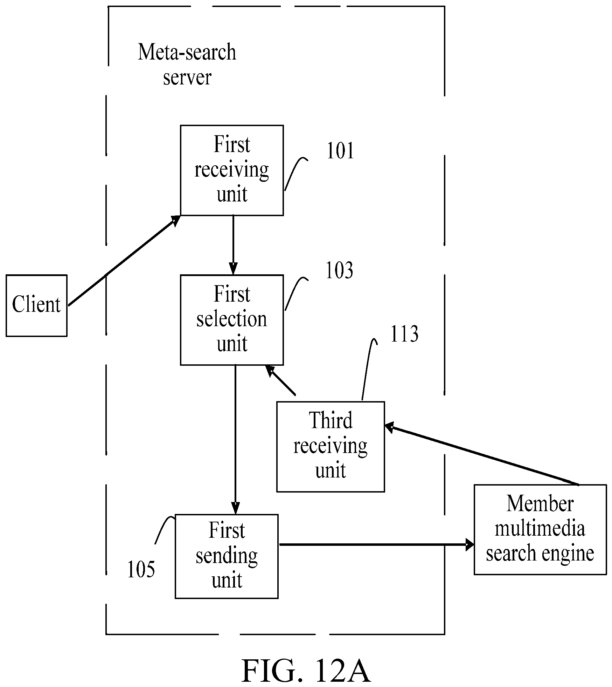

Optionally, as shown in FIG. 12A, the meta-search server may further include a third receiving unit 113.

The third receiving unit 113 is configured to receive a feature extraction algorithm ID set sent by the member multimedia search engine, determine an ID of a supported feature extraction algorithm in the set, and save a mapping relation between the ID of the supported feature extraction algorithm and the member multimedia search engine.

Then, the first selection unit 103 is specifically configured to select the corresponding member multimedia search engine through the mapping relation according to the feature extraction algorithm ID.

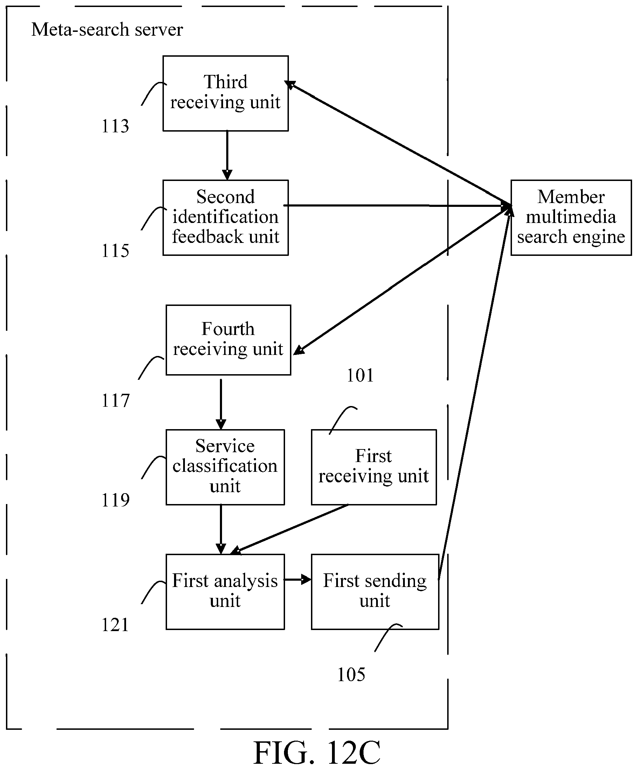

Optionally, as shown in FIG. 12C, the meta-search server may further include a second identification feedback unit 115, a fourth receiving unit 117, and a service classification unit 119.

The second identification feedback unit 115 is configured to return the ID of the supported feature extraction algorithm to the member multimedia search engine.

The fourth receiving unit 117 is configured to receive a service type corresponding to the ID of the supported feature extraction algorithm sent by the member multimedia search engine.

The service classification unit 119 is configured to provide service type classifications, and put the member multimedia search engine into the different service type classifications according to the received service type.

The search condition may further include a service type selected by the client or a key word input by the client.

Then, the meta-search server further may further include a first analysis unit 121.

The first analysis unit 121 is configured to select a member multimedia search engine from the service type classifications according to the service type selected by the client or a service type obtained by analyzing the key word.

Then, the first sending unit 105 is specifically configured to send the search request including the feature extraction algorithm ID and the feature value to a member multimedia search engine corresponding to both the feature extraction algorithm ID and the service type for search.

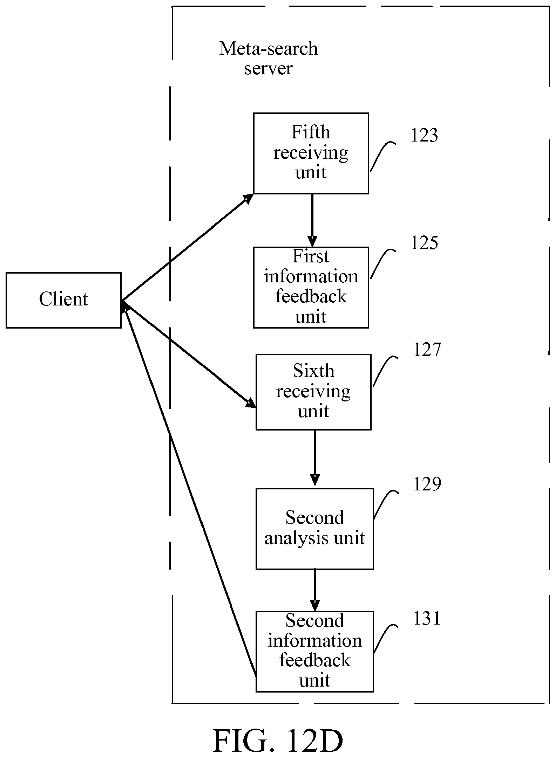

Optionally, as shown in FIG. 12D, the meta-search server may further include a fifth receiving unit 123 and a first information feedback unit 125.

The fifth receiving unit 123 is configured to receive an ID set of feature extraction algorithms supported by the client sent by the client.

The first information feedback unit 125 is configured to return support information of the ID of the feature extraction algorithm supported by the client to the client.

The search condition specifically includes: The feature extraction algorithm ID selected according to the support information, the feature value extracted by the feature extraction algorithm corresponding to the feature extraction algorithm ID selected according to the support information, the key word input by a user, and the service type.

Optionally, as shown in FIG. 12D, the meta-search server may further include a sixth receiving unit 127, a second analysis unit 129, and a second information feedback unit 131.

The sixth receiving unit 127 is configured to receive a text search condition sent by the client and the ID of the feature extraction algorithm supported by the client.

The second analysis unit 129 is configured to obtain support information the ID of the feature extraction algorithm supported by the client regarding a determined service type according to a service type determined by the text search condition by analyzing. The support information includes the support score of the ID of the feature extraction algorithm supported by the client regarding the determined service type or the determined service type and the ID of the feature extraction algorithm supporting the service type.

The second information feedback unit 131 is configured to return the determined service type and the support information to the client.

The search condition specifically includes: the feature extraction algorithm ID selected according to the support information, the service type, the feature value extracted by the feature extraction algorithm corresponding to the feature extraction algorithm ID selected according to the support information, the key word, and the service type.

As shown in 13A, in an embodiment, the present invention provides a meta-search server including a first receiving unit 201, a selection unit 203, an extraction unit 205, and a first sending unit 207.

The first receiving unit 201 is configured to receive a search condition sent by a client. The search condition includes multimedia data and text description information of the multimedia data.

The selection unit 203 is configured to select a corresponding member multimedia search engine according to the text description information.

The extraction unit 205 is configured to extract a feature value from the multimedia data according to a feature extraction algorithm supported by the selected member multimedia search engine.

The first sending unit 207 is configured to send a search request including an ID of the feature extraction algorithm and the feature value to the member multimedia search engine for search.

Optionally, the text description information may include: a key word and a service type.

Then, the selection unit 203 is specifically configured to analyze a service type according to the text description information, and select the corresponding member multimedia search engine according to a mapping relation between the service type and the member multimedia search engine.

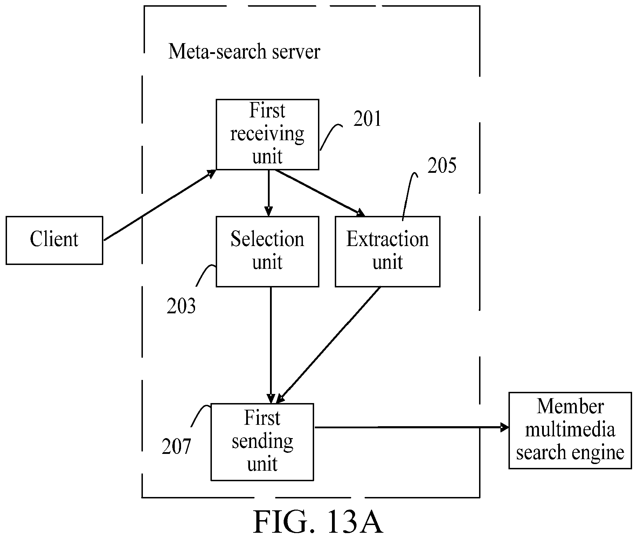

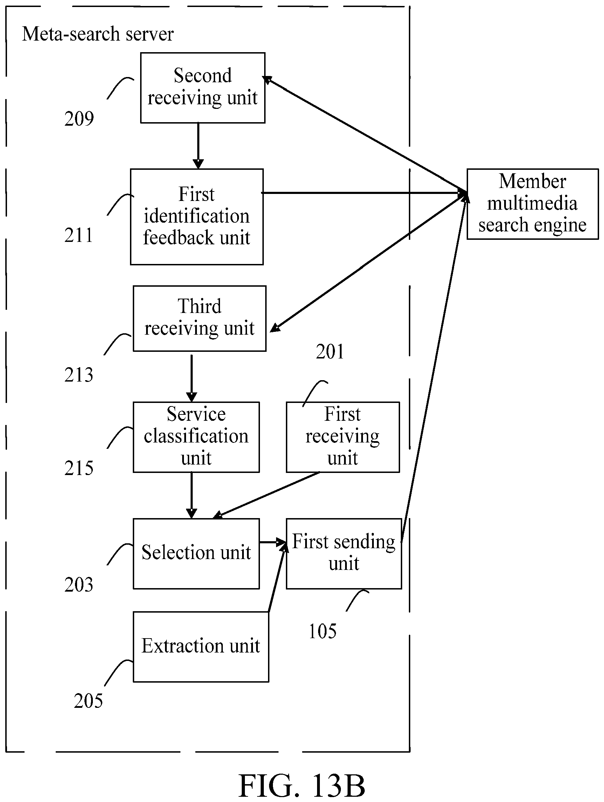

Optionally, as shown in FIG. 13B, the meta-search server may further include a second receiving unit 209, a first identification feedback unit 211, a third receiving unit 213, and a service classification unit 215.

The second receiving unit 209 is configured to receive a feature extraction algorithm ID set sent by the member multimedia search engine, determine an ID of a supported feature extraction algorithm in the set, and save the mapping relation between the ID of the supported feature extraction algorithm and the member multimedia search engine.

The first identification feedback unit 211 is configured to return the ID of the supported feature extraction algorithm to the member multimedia search engine.

The third receiving unit 213 is configured to receive a service type corresponding to the ID of the supported feature extraction algorithm sent by the member multimedia search engine.

The service classification unit 215 is configured to provide service type classifications, and put the member multimedia search engine into the different service type classifications according to the received service type.

The text description information includes: the key word and the service type.

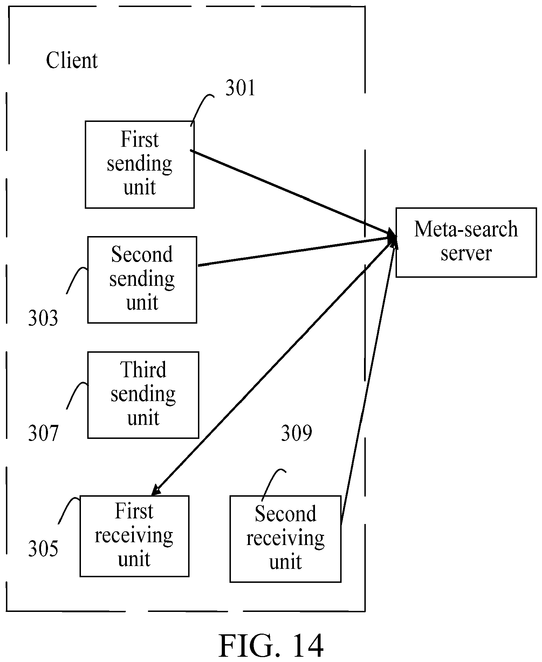

As shown in FIG. 14, in an embodiment, the present invention provides a client including a first sending unit 301.

The first sending unit 301 is configured to send a search condition to a meta-search server. The search condition includes a feature extraction algorithm ID and a feature value extracted according to a feature extraction algorithm corresponding to the feature extraction algorithm ID, so that, the meta-search server selects a member multimedia search engine corresponding to the feature extraction algorithm ID according to the feature extraction algorithm ID. The meta-search server sends a search request including the feature extraction algorithm ID and the feature value to the member multimedia search engine for search.

Optionally, the client may further include a second sending unit 303 and a first receiving unit 305.

The second sending unit 303 is configured to send an ID set of feature extraction algorithms supported by the client to the meta-search server.

The first receiving unit 305 is configured to receive support information of an ID of the feature extraction algorithm supported by the client returned by the meta-search server.

The search condition specifically includes: the feature extraction algorithm ID selected according to the support information and the feature value extracted by the feature extraction algorithm corresponding to the feature extraction algorithm ID selected according to the support information.

Optionally, the client may further include a third sending unit 307 and a second receiving unit 309.

The third sending unit 307 is configured to send a text search condition and the ID of the feature extraction algorithm supported by the client to the meta-search server, so that, the meta-search server obtains support information of the ID of the feature extraction algorithm supported by the client regarding a determined service type according to the service type determined by the text search condition by analyzing. The support information includes: a support score of the ID of the feature extraction algorithm supported by the client regarding the determined service type or the determined service type and the ID of the feature extraction algorithm supporting the service type.

The second receiving unit 309 is configured to receive the determined service type and the support information.

The search condition specifically includes: the feature extraction algorithm ID selected according to the support information, the service type, and the feature value extracted by the feature extraction algorithm corresponding to the feature extraction algorithm ID selected according to the support information.

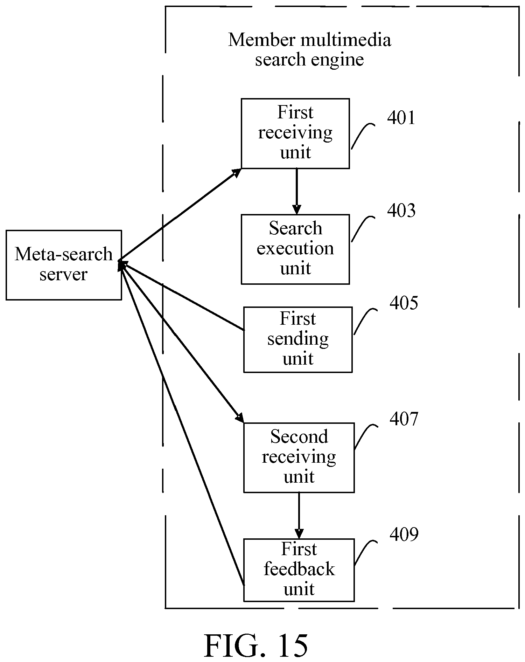

As shown in FIG. 15, in an embodiment, the present invention provides a multimedia search engine including a first receiving unit 401 and a search execution unit 403.

The first receiving unit 401 is configured to receive a search request including a feature extraction algorithm ID and a feature value of a meta-search server.

The search execution unit 403 is configured to search according to the search request.

Optionally, the multimedia search engine may further include a first sending unit 405.

The first sending unit 405 is configured to send a feature extraction algorithm ID set to the meta-search server. So that, the meta-search server determines an ID of a feature extraction algorithm supported by the meta-search server in the set, and saves a mapping relation between the ID of the supported feature extraction algorithm and a member multimedia search engine. The meta-search server selects a corresponding member multimedia search engine through the mapping relation according to the feature extraction algorithm ID.

Optionally, the multimedia search engine may further include a second receiving unit 407, a first feedback unit 409, and a first receiving unit 401.

The second receiving unit 407 is configured to receive the ID of the feature extraction algorithm supported by the meta-search server.

The first feedback unit 409 is configured to return a service type corresponding to the ID of the feature extraction algorithm supported by the meta-search server to the meta-search server, so that, the meta-search server adds the member multimedia search engine to service type classifications provided by the meta-search server according to the service type.

The first receiving unit 401 is specifically configured to receive a search request. The search request is a search request including the feature extraction algorithm ID and the feature value sent to a member multimedia search engine corresponding to both the feature extraction algorithm ID and the service type after the meta-search server receives a search condition including a service type selected by the client or a key word input by the client sent by the client.

Those of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, and an optical disk.

In view of the above, beneficial effects of the embodiments of the present invention are described in the following. A meta-search server maintains feature extraction algorithm intercommunication information, thus avoiding standardizing feature extraction algorithms. The meta-search server integrates supporting abilities of feature extraction algorithms of each of multimedia member search engines, so that the consistency between a client and the feature extraction algorithms of the member search engines is guaranteed.

**Claims**

1. A multimedia search method, **characterized in** comprising:

   receiving (301), by a meta-search server, a feature extraction algorithm ID set sent by a member multimedia search engine, determining an ID of a feature extraction algorithm supported by the meta-search server in the set, and saving a mapping relation between the ID of the supported feature extraction algorithm and the member multimedia search engine;
   receiving (101), by the meta-search server, a search condition sent by a client, wherein the search condition comprises the feature extraction algorithm ID and a feature value extracted according to the feature extraction algorithm corresponding to the feature extraction algorithm ID;
   selecting (303), by the meta-search server, the corresponding member multimedia search engine through the mapping relation according to the feature extraction algorithm ID; and
   sending (105), by the meta-search server, a search request comprising the feature extraction algorithm ID and the feature value to the member multimedia search engine for search.

2. The multimedia search method according to claim 1, wherein before the receiving the search condition sent by the client, the method further comprises:

   Receiving (1011), by the meta-search server, an algorithm name and version information sent by an algorithm provider;
   generating (1013), by the meta-search server, the feature extraction algorithm ID according to the algorithm name and the version information; and

returning (1015), by the meta-search server, the feature extraction algorithm ID to the algorithm provider, so that the algorithm provider distributes the feature extraction algorithm ID to the client and the member multimedia search engine.

3. The multimedia search method according to claim 1, further comprising:

collecting and organizing (201), by the meta-search server, personalized information of a client user according to requirements of the member multimedia search engine;
wherein the search request further comprises the personalized information corresponding to the client; and
the sending the search request comprising the feature extraction algorithm ID and the feature value to the member multimedia search engine for search specifically comprises:

sending (203), by the meta-search server, the search request comprising the personalized information, the feature extraction algorithm ID, and the feature value to the member multimedia search engine for search.

4. The multimedia search method according to claim 1, further comprising:

returning (305), by the meta-search server, the ID of the supported feature extraction algorithm to the member multimedia search engine, receiving a service type corresponding to the ID of the supported feature extraction algorithm sent by the member multimedia search engine;
providing (307), by the meta-search server, service type classifications, and putting the member multimedia search engine into the different service type classifications according to the received service type;
wherein the search condition further comprises a service type selected by the client or a key word input by the client;
the method further comprises:

selecting (309), by the meta-search server, a member multimedia search engine from the service type classifications according to the service type selected by the client or a service type obtained by analyzing the key word;
the sending the search request comprising the feature extraction algorithm ID and the feature value to the member multimedia search engine for search specifically comprises:

sending (309), by the meta-search server, the search request comprising the feature extraction algorithm ID and the feature value to a member multimedia search engine corresponding to both the feature extraction algorithm ID and the service type for search.

5. The multimedia search method according to claim 1, further comprising:

returning (401), by the meta-search server, the ID of the supported feature extraction algorithm to the member multimedia search engine, receiving the service type corresponding to the ID of the supported feature extraction algorithm sent by the member multimedia search engine;
counting (403), by the meta-search server, the ID of the supported feature extraction algorithm and the corresponding service type, and obtaining a support score of the ID of the supported feature extraction algorithm regarding the corresponding service type.

6. The multimedia search method according to claim 1, wherein before the receiving the search condition sent by the client, the method further comprises:

receiving (501), by the meta-search server, an ID set of feature extraction algorithms supported by the client sent by the client;
returning (503), by the meta-search server, support information of the ID of the feature extraction algorithm supported by the client to the client;
the search condition specifically comprises:

a feature extraction algorithm ID selected according to the support information and a feature value extracted by the feature extraction algorithm corresponding to the feature extraction algorithm ID selected according to the support information.

7. The multimedia search method according to claim 1, wherein before the receiving the search condition sent by the client, the method further comprises:

receiving (601), by the meta-search server, a text search condition and the ID of the feature extraction algorithm supported by the client sent by the client;
obtaining (603), by the meta-search server, support information of the ID of the feature extraction algorithm supported by the client regarding the determined service type according to a service type determined by the text search condition by analyzing, wherein the support information comprises the support score of the ID of the feature extraction algorithm supported by the client regarding the determined service type or the determined service type and the ID of the feature extraction algorithm supporting the service type;
returning (605), by the meta-search server, the determined service type and the support information to the client; the search condition specifically comprises:

the feature extraction algorithm ID selected according to the support information, the service type, and the feature value extracted by the feature extraction algorithm corresponding to the feature extraction algorithm ID selected according to the support information.

8. A multimedia search method, **characterized in** comprising:

receiving (713), by a meta-search server, a feature extraction algorithm ID set sent by a member multimedia search engine, determining an ID of a feature extraction algorithm supported by the meta-search server in the set, and saving a mapping relation between the ID of the supported feature extraction algorithm and the member multimedia search engine;
returning (715), by the meta-search server, the ID of the supported feature extraction algorithm to the member multimedia search engine, and receiving a service type corresponding to the ID of the supported feature extraction algorithm sent by the member multimedia search engine;
providing (717), by the meta-search server, service type classifications, and putting the member multimedia search engine into the different service type classifications according to the received service type;
wherein a text description information further comprises a service type input by a user;
receiving (701), by the meta-search server, a search condition sent by a client, wherein the search condition comprises multimedia data and the text description information of the multimedia data;
analyzing(703), by the meta-search server, the service type according to the text description information, and selecting the corresponding member multimedia search engine according to a mapping relation between the service type and the member multimedia search engine;
extracting (705), by the meta-search server, a feature value from the multimedia data according to a feature extraction algorithm supported by the selected member multimedia search engine; and
sending (707), by the meta-search server, a search request comprising an ID of the feature extraction algorithm and the feature value to the member multimedia search engine for search.

9. A meta-search server, **characterized in** comprising:

a second receiving unit (113), configured to receive a feature extraction algorithm ID set sent by a member multimedia search engine, determine an ID of a feature extraction algorithm supported by a meta-search server in the set, and save a mapping relation between the ID of the supported feature extraction algorithm and the member multimedia search engine;
a first receiving unit (101), configured to receive a search condition sent by a client, wherein the search condition comprises a feature extraction algorithm ID and a feature value extracted according to a feature extraction algorithm corresponding to the feature extraction algorithm ID;
a selection unit (103), configured to select the corresponding member multimedia search engine through the mapping relation according to the feature extraction algorithm ID; and
a sending unit (105), configured to send a search request comprising the feature extraction algorithm ID and the feature value to the member multimedia search engine for search.

**Patentansprüche**

1. Multimedia-Suchverfahren, **dadurch gekennzeichnet, dass** es Folgendes umfasst:

Empfangen (301), durch einen Metasuchserver, eines Merkmalsextrahierungsalgorithmus-ID-Satzes, der durch eine Mitglied-Multimedia-Suchmaschine gesendet wird, Bestimmen einer ID eines Merkmalsextrahierungsalgorithmus, der durch den Metasuchserver unterstützt wird, im Satz und Speichern einer Abbildungsbeziehung zwischen der ID des unterstützten Merkmalsextrahierungsalgorithmus und der Mitglied-Multimedia-Suchmaschine;

Empfangen (101), durch den Metasuchserver, einer Suchbedingung, die durch einen Client gesendet wird, wobei die Suchbedingung die Merkmalsextrahierungsalgorithmus-ID und einen Merkmalswert, der gemäß dem der Merkmalsextrahierungsalgorithmus-ID entsprechenden Merkmalsextrahierungsalgorithmus extrahiert wird, umfasst;

Auswählen (303), durch den Metasuchserver, der entsprechenden Mitglied-Multimedia-Suchmaschine durch die Abbildungsbeziehung gemäß der Merkmalsextrahierungsalgorithmus-ID; und

Senden (105), durch den Metasuchserver, einer Suchanfrage, die die Merkmalsextrahierungsalgorithmus-ID und den Merkmalswert umfasst, zur Mitglied-Multimedia-Suchmaschine zur Suche.

2. Multimedia-Suchverfahren nach Anspruch 1, wobei das Verfahren vor dem Empfangen der Suchbedingung, die durch den Client gesendet wird, ferner Folgendes umfasst:

Empfangen (1011), durch den Metasuchserver, eines Algorithmusnamens und von Versionsinformationen, die durch einen Algorithmusanbieter gesendet werden;

Erzeugen (1013), durch den Metasuchserver, der Merkmalsextrahierungsalgorithmus-ID gemäß dem Algorithmusnamen und den Versionsinformationen und

Zurücksenden (1015), durch den Metasuchserver, der Merkmalsextrahierungsalgorithmus-ID zum Algorithmusanbieter, so dass der Algorithmusanbieter die Merkmalsextrahierungsalgorithmus-ID zum Client und der Mitglied-Multimedia-Suchmaschine verteilt.

3. Multimedia-Suchverfahren nach Anspruch 1, ferner umfassend:

Erfassen und Organisieren (201), durch den Metasuchserver, von personalisierten Informationen eines Client-Benutzers gemäß Anforderungen der Mitglied-Multimedia-Suchmaschine;

wobei die Suchanfrage ferner die personalisierten Informationen, die dem Client entsprechen, umfasst und das Senden der Suchanfrage, die die Merkmalsextrahierungsalgorithmus-ID und den Merkmalswert umfasst, zur Mitglied-Multimedia-Suchmaschine zur Suche spezifisch Folgendes umfasst:

Senden (203), durch den Metasuchserver, der Suchanfrage, die die personalisierten Informationen, die Merkmalsextrahierungsalgorithmus-ID und den Merkmalswert umfasst, zur Mitglied-Multimedia-Suchmaschine zur Suche.

4. Multimedia-Suchverfahren nach Anspruch 1, ferner umfassend:

Zurücksenden (305), durch den Metasuchserver, der ID des unterstützten Merkmalsextrahierungsalgorithmus zur Mitglied-Multimedia-Suchmaschine, Empfangen einer Dienstart, die der ID des unterstützten Merkmalsextrahierungsalgorithmus entspricht, die durch die Mitglied-Multimedia-Suchmaschine gesendet wird;

Bereitstellen (307), durch den Metasuchserver, von Dienstartklassifikationen und Hineinsetzen der Mitglied-Multimedia-Suchmaschine in die unterschiedlichen Dienstartklassifikationen gemäß der empfangenen Dienstart;

wobei die Suchbedingung ferner eine Dienstart, die durch den Client ausgewählt wird, oder ein Schlüsselwort, das durch den Client eingegeben wird, umfasst;

wobei das Verfahren ferner Folgendes umfasst:

Auswählen (309), durch den Metasuchserver, einer Mitglied-Multimedia-Suchmaschine aus den Dienstartklassifikationen gemäß der Dienstart, die durch den Client ausgewählt wird, oder einer Dienstart, die durch eine Analyse des Schlüsselworts erhalten wird;

wobei das Senden der Suchanfrage, die die Merkmalsextrahierungsalgorithmus-ID und den Merkmalswert umfasst, zur Mitglied-Multimedia-Suchmaschine zur Suche spezifisch Folgendes umfasst:

Senden (309), durch den Metasuchserver, der Suchanfrage, die die Merkmalsextrahierungsalgorithmus-ID und den Merkmalswert umfasst, zu einer Mitglied-Multimedia-Suchmaschine, die sowohl der Merkmalsextrahierungsalgorithmus-ID als auch der Dienstart entspricht, zur Suche.

**5.** Multimedia-Suchverfahren nach Anspruch 1, ferner umfassend:

Zurücksenden (401), durch den Metasuchserver, der ID des unterstützten Merkmalsextrahierungsalgorithmus zur Mitglied-Multimedia-Suchmaschine, Empfangen der Dienstart, die der ID des unterstützten Merkmalsextrahierungsalgorithmus entspricht, die durch die Mitglied-Multimedia-Suchmaschine gesendet wird;
Zählen (403), durch den Metasuchserver, der ID des unterstützten Merkmalsextrahierungsalgorithmus und der entsprechenden Dienstart und Erhalten einer Unterstützungsbewertung der ID des unterstützten Merkmalsextrahierungsalgorithmus bezüglich der entsprechenden Dienstart.

**6.** Multimedia-Suchverfahren nach Anspruch 1, wobei das Verfahren vor dem Empfangen der Suchbedingung, die durch den Client gesendet wird, ferner Folgendes umfasst:

Empfangen (501), durch den Metasuchserver, eines ID-Satzes von Merkmalsextrahierungsalgorithmen, die durch den Client unterstützt werden, der durch den Client gesendet wird;
Zurücksenden (503), durch den Metasuchserver, von Unterstützungsinformationen der ID des Merkmalsextrahierungsalgorithmus, der durch den Client unterstützt wird, zum Client;
wobei die Suchbedingung spezifisch Folgendes umfasst:

eine Merkmalsextrahierungsalgorithmus-ID, die gemäß den Unterstützungsinformationen ausgewählt wird, und einen Merkmalswert, der durch den Merkmalsextrahierungsalgorithmus, der der gemäß den Unterstützungsinformationen ausgewählten Merkmalsextrahierungsalgorithmus-ID entspricht, extrahiert wird.

**7.** Multimedia-Suchverfahren nach Anspruch 1, wobei das Verfahren vor dem Empfangen der Suchbedingung, die durch den Client gesendet wird, ferner Folgendes umfasst:

Empfangen (601), durch den Metasuchserver, einer Textsuchbedingung und der ID des Merkmalsextrahierungsalgorithmus, der durch den Client unterstützt wird, die durch den Client gesendet wird;
Erhalten (603), durch den Metasuchserver, von Unterstützungsinformationen der ID des Merkmalsextrahierungsalgorithmus, der durch den Client unterstützt wird, bezüglich der bestimmten Dienstart gemäß einer Dienstart, die durch die Textsuchbedingung durch eine Analyse bestimmt wird, wobei die Unterstützungsinformationen die Unterstützungsbewertung der ID des Merkmalsextrahierungsalgorithmus, der durch den Client unterstützt wird, bezüglich der bestimmten Dienstart oder die bestimmte Dienstart und die ID des Merkmalsextrahierungsalgorithmus, der die Dienstart unterstützt, umfassen;
Zurücksenden (605), durch den Metasuchserver, der bestimmten Dienstart und der Unterstützungsinformationen zum Client;
wobei die Suchbedingung spezifisch Folgendes umfasst:

die Merkmalsextrahierungsalgorithmus-ID, die gemäß den Unterstützungsinformationen ausgewählt wird, die Dienstart und den Merkmalswert, der durch den Merkmalsextrahierungsalgorithmus, der der gemäß den Unterstützungsinformationen ausgewählten Merkmalsextrahierungsalgorithmus-ID entspricht, extrahiert wird.

**8.** Multimedia-Suchverfahren, **dadurch gekennzeichnet, dass** es Folgendes umfasst:

Empfangen (713), durch einen Metasuchserver, eines Merkmalsextrahierungsalgorithmus-ID-Satzes, der durch eine Mitglied-Multimedia-Suchmaschine gesendet wird, Bestimmen einer ID eines Merkmalsextrahierungsalgorithmus, der durch den Metasuchserver unterstützt wird, im Satz und Speichern einer Abbildungsbeziehung zwischen der ID des unterstützten Merkmalsextrahierungsalgorithmus und der Mitglied-Multimedia-Suchmaschine;
Zurücksenden (715), durch den Metasuchserver, der ID des unterstützten Merkmalsextrahierungsalgorithmus zur Mitglied-Multimedia-Suchmaschine und Empfangen einer Dienstart, die der ID des unterstützten Merkmalsextrahierungsalgorithmus, die durch die Mitglied-Multimedia-Suchmaschine gesendet wird, entspricht;
Bereitstellen (717), durch den Metasuchserver, von Dienstartklassifikationen und Hineinsetzen der Mitglied-Multimedia-Suchmaschine in die unterschiedlichen Dienstartklassifikationen gemäß der empfangenen Dienstart;
wobei Textbeschreibungsinformationen ferner eine Dienstart, die durch einen Benutzer eingegeben wird, umfassen;
Empfangen (701), durch den Metasuchserver, einer Suchbedingung, die durch einen Client gesendet wird, wobei die Suchbedingung Multimedia-Daten und die Textbeschreibungsinformationen der Multimedia-Daten umfasst;

Analysieren (703), durch den Metasuchserver, der Dienstart gemäß den Textbeschreibungsinformationen und Auswählen der entsprechenden Mitglied-Multimedia-Suchmaschine gemäß einer Abbildungsbeziehung zwischen der Dienstart und der Mitglied-Multimedia-Suchmaschine;

Extrahieren (705), durch den Metasuchserver, eines Merkmalswerts aus den Multimedia-Daten gemäß einem Merkmalsextrahierungsalgorithmus, der durch die ausgewählte Mitglied-Multimedia-Suchmaschine unterstützt wird; und

Senden (707), durch den Metasuchserver, einer Suchanfrage, die eine ID des Merkmalsextrahierungsalgorithmus und den Merkmalswert umfasst, zur Mitglied-Multimedia-Suchmaschine zur Suche.

9. Metasuchserver, **dadurch gekennzeichnet, dass** er Folgendes umfasst:

eine zweite Empfangseinheit (113), die konfiguriert ist zum Empfangen eines Merkmalsextrahierungsalgorithmus-ID-Satzes, der durch eine Mitglied-Multimedia-Suchmaschine gesendet wird, zum Bestimmen einer ID eines Merkmalsextrahierungsalgorithmus, der durch einen Metasuchserver unterstützt wird, im Satz und zum Speichern einer Abbildungsbeziehung zwischen der ID des unterstützten Merkmalsextrahierungsalgorithmus und der Mitglied-Multimedia-Suchmaschine;

eine erste Empfangseinheit (101), die konfiguriert ist zum Empfangen einer Suchbedingung, die durch einen Client gesendet wird, wobei die Suchbedingung eine Merkmalsextrahierungsalgorithmus-ID und einen Merkmalswert, der gemäß einem der Merkmalsextrahierungsalgorithmus-ID entsprechenden Merkmalsextrahierungsalgorithmus extrahiert wird, umfasst;

eine Auswahleinheit (103), die konfiguriert ist zum Auswählen der entsprechenden Mitglied-Multimedia-Suchmaschine durch die Abbildungsbeziehung gemäß der Merkmalsextrahierungsalgorithmus-ID; und

eine Sendeeinheit (105), die konfiguriert ist zum Senden einer Suchanfrage, die die Merkmalsextrahierungsalgorithmus-ID und den Merkmalswert umfasst, zur Mitglied-Multimedia-Suchmaschine zur Suche.

## Revendications

1. Procédé de recherche multimédia, le procédé étant **caractérisé en ce qu'**il comprend les étapes suivantes :

réception (301), par un serveur de méta-recherche, d'un ensemble d'identifications d'algorithmes d'extraction de caractéristiques envoyé par un moteur de recherche multimédia membre, détermination d'une identification d'un algorithme d'extraction de caractéristiques pris en charge par le serveur de méta-recherche parmi l'ensemble, et sauvegarde d'une relation de mise en correspondance entre l'identification de l'algorithme d'extraction de caractéristiques pris en charge et le moteur de recherche multimédia membre ;

réception (101), par le serveur de méta-recherche, d'une condition de recherche envoyée par un client, la condition de recherche comprenant l'identification d'algorithme d'extraction de caractéristiques et une valeur de caractéristique extraite selon l'algorithme d'extraction de caractéristiques correspondant à l'identification d'algorithme d'extraction de caractéristiques ;

sélection (303), par le serveur de méta-recherche, du moteur de recherche multimédia membre correspondant par le biais de la relation de mise en correspondance selon l'identification d'algorithme d'extraction de caractéristiques ; et

envoi (105), par le serveur de méta-recherche, d'une demande de recherche comprenant l'identification d'algorithme d'extraction de caractéristiques et la valeur de caractéristique au moteur de recherche multimédia membre en vue d'une recherche.

2. Procédé de recherche multimédia selon la revendication 1, le procédé comprenant en outre, avant l'étape de réception de la condition de recherche envoyée par le client, les étapes suivantes :

réception (1011), par le serveur de méta-recherche, d'un nom d'algorithme et d'informations de version envoyés par un fournisseur d'algorithmes ;

génération (1013), par le serveur de méta-recherche, de l'identification d'algorithme d'extraction de caractéristiques selon le nom d'algorithme et les informations de version ; et

renvoi (1015), par le serveur de méta-recherche, de l'identification d'algorithme d'extraction de caractéristiques au fournisseur d'algorithmes, de manière à ce que le fournisseur d'algorithmes distribue l'identification d'algorithme d'extraction de caractéristiques au client et au moteur de recherche multimédia membre.

**3.** Procédé de recherche multimédia selon la revendication 1, comprenant en outre les étapes suivantes :

collecte et organisation (201), par le serveur de méta-recherche, d'informations personnalisées relatives à un utilisateur client selon des exigences du moteur de recherche multimédia membre ;
la demande de recherche comprenant en outre les informations personnalisées correspondant au client ; et
l'envoi de la demande de recherche comprenant l'identification d'algorithme d'extraction de caractéristiques et la valeur de caractéristique au moteur de recherche multimédia membre en vue d'une recherche comprenant plus particulièrement l'étape suivante :

envoi (203), par le serveur de méta-recherche, de la demande de recherche comprenant les informations personnalisées, l'identification d'algorithme d'extraction de caractéristiques et la valeur de caractéristique au moteur de recherche multimédia membre en vue d'une recherche.

**4.** Procédé de recherche multimédia selon la revendication 1, comprenant en outre les étapes suivantes :

renvoi (305), par le serveur de méta-recherche, de l'identification de l'algorithme d'extraction de caractéristiques pris en charge au moteur de recherche multimédia membre, réception d'un type de service correspondant à l'identification de l'algorithme d'extraction de caractéristiques pris en charge envoyée par le moteur de recherche multimédia membre ;
fourniture (307), par le serveur de méta-recherche, de classifications de type de service, et rangement du moteur de recherche multimédia membre dans les différentes classifications de type de service selon le type de service reçu ;
la condition de recherche comprenant en outre un type de service sélectionné par le client ou un mot-clé entré par le client ;
le procédé comprenant en outre l'étape suivante :

sélection (309), par le serveur de méta-recherche, d'un moteur de recherche multimédia membre à partir des classifications de type de service selon le type de service sélectionné par le client ou un type de service obtenu par analyse du mot-clé ;
l'étape d'envoi de la demande de recherche comprenant l'identification d'algorithme d'extraction de caractéristiques et la valeur de caractéristique au moteur de recherche multimédia membre en vue d'une recherche comprenant plus particulièrement l'étape suivante :

envoi (309), par le serveur de méta-recherche, de la demande de recherche comprenant l'identification d'algorithme d'extraction de caractéristiques et la valeur de caractéristique à un moteur de recherche multimédia membre correspondant à la fois à l'identification d'algorithme d'extraction de caractéristiques et au type de service en vue d'une recherche.

**5.** Procédé de recherche multimédia selon la revendication 1, comprenant en outre les étapes suivantes :

renvoi (401), par le serveur de méta-recherche, de l'identification de l'algorithme d'extraction de caractéristiques pris en charge au moteur de recherche multimédia membre, réception du type de service correspondant à l'identification de l'algorithme d'extraction de caractéristiques pris en charge envoyée par le moteur de recherche multimédia membre ;
comptabilisation (403), par le serveur de méta-recherche, de l'identification de l'algorithme d'extraction de caractéristiques pris en charge et du type de service correspondant, et obtention d'un score de prise en charge de l'identification de l'algorithme d'extraction de caractéristiques pris en charge par rapport au type de service correspondant.

**6.** Procédé de recherche multimédia selon la revendication 1, le procédé comprenant en outre, avant l'étape de réception de la condition de recherche envoyée par le client, les étapes suivantes :

réception (501), par le serveur de méta-recherche, d'un ensemble d'identifications d'algorithmes d'extraction de caractéristiques pris en charge par le client envoyé par le client ;
renvoi (503), par le serveur de méta-recherche, d'informations de prise en charge relatives à l'identification de l'algorithme d'extraction de caractéristiques pris en charge par le client au client ;
la condition de recherche comprenant plus particulièrement :

une identification d'algorithme d'extraction de caractéristiques selon les informations de prise en charge et une valeur de caractéristique extraite par l'algorithme d'extraction de caractéristiques correspondant à l'identification d'algorithme d'extraction de caractéristiques sélectionnée selon les informations de prise en charge.

**7.** Procédé de recherche multimédia selon la revendication 1, le procédé comprenant en outre, avant l'étape de réception de la condition de recherche envoyée par le client, les étapes suivantes :

réception (601), par le serveur de méta-recherche, d'une condition de recherche textuelle et de l'identification de l'algorithme d'extraction de caractéristiques pris en charge par le client envoyées par le client ;

obtention (603), par le serveur de méta-recherche, d'informations de prise en charge de l'identification de l'algorithme d'extraction de caractéristiques pris en charge par le client par rapport au type de service déterminé selon un type de service déterminé par la condition de recherche textuelle par analyse, les informations de prise en charge comprenant le score de prise en charge de l'identification de l'algorithme d'extraction de caractéristiques pris en charge par le client par rapport au type de service déterminé ou le type de service déterminé et l'identification de l'algorithme d'extraction de caractéristiques prenant en charge le type de service ;

renvoi (605), par le serveur de méta-recherche, du type de service déterminé et des informations de prise en charge au client ;

la condition de recherche comprenant plus particulièrement :

l'identification d'algorithme d'extraction de caractéristiques sélectionnée selon les informations de prise en charge, le type de service et la valeur de caractéristique extraite par l'algorithme d'extraction de caractéristiques correspondant à l'identification d'algorithme d'extraction de caractéristiques sélectionnée selon les informations de prise en charge.

**8.** Procédé de recherche multimédia, le procédé étant **caractérisé en ce qu'**il comprend les étapes suivantes :

réception (713), par un serveur de méta-recherche, d'un ensemble d'identifications d'algorithmes d'extraction de caractéristiques envoyé par un moteur de recherche multimédia membre, détermination d'une identification d'un algorithme d'extraction de caractéristiques pris en charge par le serveur de méta-recherche parmi l'ensemble, et sauvegarde d'une relation de mise en correspondance entre l'identification de l'algorithme d'extraction de caractéristiques pris en charge et le moteur de recherche multimédia membre ;

renvoi (715), par le serveur de méta-recherche, de l'identification de l'algorithme d'extraction de caractéristiques pris en charge au moteur de recherche multimédia membre, et réception d'un type de service correspondant à l'identification de l'algorithme d'extraction de caractéristiques pris en charge envoyée par le moteur de recherche multimédia membre ;

fourniture (717), par le serveur de méta-recherche, de classifications de type de service, et rangement du moteur de recherche multimédia membre dans les différentes classifications de type de service selon le type de service reçu ;

des informations de description textuelle comprenant en outre un type de service entré par un utilisateur ;

réception (701), par le serveur de méta-recherche, d'une condition de recherche envoyée par un client, la condition de recherche comprenant des données multimédia et les informations de description textuelle des données multimédia ;

analyse (703), par le serveur de méta-recherche, du type de service selon les informations de description textuelle, et sélection du moteur de recherche multimédia membre correspondant selon une relation de mise en correspondance entre le type de service et le moteur de recherche multimédia membre ;

extraction (705), par le serveur de méta-recherche, d'une valeur de caractéristique à partir des données multimédia selon un algorithme d'extraction de caractéristiques pris en charge par le moteur de recherche multimédia membre sélectionné ; et

envoi (707), par le serveur de méta-recherche, d'une demande de recherche comprenant une identification de l'algorithme d'extraction de caractéristiques et la valeur de caractéristique au moteur de recherche multimédia membre en vue d'une recherche.

**9.** Serveur de méta-recherche, le serveur de méta-recherche étant **caractérisé en ce qu'**il comprend :

une deuxième unité de réception (113), configurée pour recevoir un ensemble d'identifications d'algorithmes d'extraction de caractéristiques envoyé par un moteur de recherche multimédia membre, déterminer une identification d'un algorithme d'extraction de caractéristiques pris en charge par un serveur de méta-recherche parmi l'ensemble, et sauvegarder une relation de mise en correspondance entre l'identification de l'algorithme d'extraction de caractéristiques pris en charge et le moteur de recherche multimédia membre ;

une première unité de réception (101), configurée pour recevoir une condition de recherche envoyée par un client, la condition de recherche comprenant une identification d'algorithme d'extraction de caractéristiques et une valeur de caractéristique extraite selon un algorithme d'extraction de caractéristiques correspondant à l'identification d'algorithme d'extraction de caractéristiques ;

une unité de sélection (103), configurée pour sélectionner le moteur de recherche multimédia membre correspondant par le biais de la relation de mise en correspondance selon l'identification d'algorithme d'extraction de caractéristiques ; et

une unité d'envoi (105), configurée pour envoyer une demande de recherche comprenant l'identification d'algorithme d'extraction de caractéristiques et la valeur de caractéristique au moteur de recherche multimédia membre en vue d'une recherche.

Meta-search server receives a search condition sent by a client — S101

Meta-search server selects a member multimedia search engine corresponding to the feature extraction algorithm ID according to the feature extraction algorithm ID — S103

Meta-search server sends a search request including the feature extraction algorithm ID and the feature value to the member multimedia search engine for search — S105

Meta-search server receives a search result returned by the member multimedia search engine — S107

Meta-search server returns the processed search result to the client after processing the search result — S109

FIG. 1A

Meta-search server receives an algorithm name and version information provided by an algorithm provider — S1011

Meta-search server generates the feature extraction algorithm ID according to the algorithm name and the version information — S1013

Meta-search server returns the feature extraction algorithm ID to the algorithm provider — S1015

## FIG. 1B

Meta-search server collects and organizes personalized information of a client user according to requirements of the member multimedia search engine — S201

Meta-search server sends a search request including the personalized information corresponding to the client, the feature extraction algorithm ID, and the feature value to the member multimedia search engine for search — S203

## FIG. 2

Meta-search server receives a feature extraction algorithm ID set sent by the member multimedia search engine, determines an ID of a feature extraction algorithm supported by the meta-search server in the set, and saves a mapping relation between the ID of the supported feature extraction algorithm and the member multimedia search engine — S301

Meta-search server selects a corresponding member multimedia search engine through the mapping relation according to the feature extraction algorithm ID — S303

Meta-search server returns the ID of the feature extraction algorithm supported by the meta-search server to the member multimedia search engine, and receives a service type corresponding to the ID of the supported feature extraction algorithm sent by the member multimedia search engine — S305

Meta-search server provides service type classifications, and puts the member multimedia search engine into the different service type classifications according to the received service type — S307

# FIG. 3A

Meta-search server selects a member multimedia search engine from the service type classifications according to the service type selected by the client or a service type obtained by analyzing the key word ⟍ S309

Meta-search server sends the search request including the feature extraction algorithm ID and the feature value to a member multimedia search engine corresponding to both the feature extraction algorithm ID and the service type for search ⟍ S311

**FIG. 3B**

Meta-search server returns the ID of the feature extraction algorithm supported by the meta-search server to the member multimedia search engine, and receives a service type corresponding to the ID of the supported feature extraction algorithm sent by the member multimedia search engine ⟍ S401

Meta-search server counts the ID of the feature extraction algorithm supported by the meta-search server and the corresponding service type, and obtains a support mark of the ID of the feature extraction algorithm supported by the meta-search server regarding the corresponding service type ⟍ S403

**FIG. 4**

**FIG. 5**

Client — Meta-search server

S501 Send an ID set of algorithms supported by the client

S503 Return support information of the server regarding each of the algorithms

S505 Determine a feature extraction algorithm to be used by the client

**FIG. 6**

Client — Meta-search server

S601 Text search condition and a set of supported algorithms

S603 Determine the search service type according to the text search condition

S603 Analyze support information of the client algorithm regarding the service type

S605 Service type and the support information of the client algorithm

Client | Meta-search server | Search engine

S701 Send multimedia data and text description information

S703 Select a search engine

S705 Extract a feature (according to an algorithm supported by the selected search engine)

S707 Send the feature extraction algorithm ID and the feature value

Search

S709 Return a search result

S711 Return the result

Process the result

FIG. 7A

Meta-search server receives a feature extraction algorithm ID set sent by the member multimedia search engine, determines an ID of a feature extraction algorithm supported by the meta-search server in the set, and saves a mapping relation between the ID of the supported feature extraction algorithm and the member multimedia search engine

S713

Meta-search server returns the ID of the feature extraction algorithm supported by the meta-search server to the member multimedia search engine, and receives a service type corresponding to the ID of the supported feature extraction algorithm sent by the member multimedia search engine

S715

Meta-search server provides service type classifications, and puts the member multimedia search engine into the different service type classifications according to the received service type

S717

FIG. 7B

| Client sends a search condition to a meta-search server, and the search condition includes a feature extraction algorithm ID and a feature value extracted according to a feature extraction algorithm corresponding to the feature extraction algorithm ID | S801 |

| Meta-search server selects a member multimedia search engine corresponding to the feature extraction algorithm ID according to the feature extraction algorithm ID | S803 |

| Meta-search server sends a search request including the feature extraction algorithm ID and the feature value to the member multimedia search engine for search | S805 |

**FIG. 8**

Member multimedia search engine
receives a search request including a
feature extraction algorithm ID and
a feature value

S1101

Member multimedia search engine
performs searching according to the
search request

S1103

FIG. 9

Member multimedia search engine sends a feature extraction algorithm ID set to a meta-search server, and the meta-search server determines an ID of a supported feature extraction algorithm in the set, and saves a mapping relation between the ID of the supported feature extraction algorithm and the member multimedia search engine ⟋ S1201

Meta-search server selects a corresponding member multimedia search engine through the mapping relation according to the feature extraction algorithm ID ⟋ S1203

FIG. 10

Member multimedia search engine
receives the ID of the supported
feature extraction algorithm and
returns a service type corresponding
to the ID of the supported feature
extraction algorithm to the meta-
search server

S1301

Member multimedia search engine
receives the search request, and the
search request is a search request
including the feature extraction
algorithm ID and the feature value,
which is sent to a member
multimedia search engine
corresponding to both the feature
extraction algorithm ID and the
service type after the meta-search
server receives a search condition
including the service type selected by
the client or a key word input by the
client sent by the client

S1303

FIG. 11

Meta-search
server

First
receiving
unit — 101

Client

First
selection
unit — 103

113

Third
receiving
unit

105

First
sending
unit

Member
multimedia
search engine

FIG. 12A

FIG. 12B

FIG. 12C

FIG. 12D

Meta-search server

First receiving unit — 201

Client

Selection unit — 203

Extraction unit — 205

First sending unit — 207

Member multimedia search engine

## FIG. 13A

Meta-search server

Second receiving unit

209

First identification feedback unit

211

Third receiving unit

213

Service classification unit

215

First receiving unit

201

Selection unit

203

First sending unit

105

Extraction unit

205

Member multimedia search engine

FIG. 13B

Client

First
sending
unit
301

Second
sending
unit
303

Third
sending
unit
307

First
receiving
unit
305

Second
receiving
unit
309

Meta-search
server

FIG. 14

FIG. 15

**EP 2 343 661 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003041047 A1

**Non-patent literature cited in the description**

- Query-Adaptive Fusion for Multimodal Search. **KENNEDY L et al.** PROCEEDINGS OF THE IEEE. IEEE, 01 April 2008, vol. 96, 567-588